# EUROPEAN PATENT SPECIFICATION

(11) **EP 2 232 824 B1**
(45) Date of publication and mention of the grant of the patent: **06.07.2011**
(21) Application number: 08803943.3
(22) Date of filing: 10.09.2008
(51) Int. Cl.: H04L 29/06

(54) **METHOD FOR ESTABLISHING A CALL IN A COMMUNICATION NETWORK, WITH ADVANCED NETWORK RESOURCES SELECTION CAPABILITIES**
VERFAHREN ZUM HERSTELLEN EINER VERBINDUNG IN EINEM KOMMUNIKATIONSNETZ MIT ERWEITERTEN NETZBETRIEBSMITTEL-AUSWAHLFÄHIGKEITEN
PROCÉDÉ PERMETTANT D'ÉTABLIR UN APPEL DANS UN RÉSEAU DE COMMUNICATION, AVEC DES CAPACITÉS DE SÉLECTION DE RESSOURCES DE RÉSEAU ÉVOLUÉES

(30) Priority: 12.09.2007 US 971704 P; 14.09.2007 US 972390 P; 26.10.2007 US 982877 P
(43) Date of publication of application: 29.09.2010
(73) Proprietor: Telefonaktiebolaget L M Ericsson (publ), 164 83 Stockholm (SE)
(72) Inventor: KAMPMANN, Dirk, NL-6291 Gp Vaals (NL); POSCHER, Jens, 41372 Niederkruechten (DE)
(74) Representative: Tonscheidt, Andreas
(86) International application number: PCT/EP2008/061976
(87) International publication number: WO 2009/034099

(56) References cited:
- US-A1- 2002 044 547
- US-A1- 2007 053 343
- US-B1- 6 947 747

## Description

### [Technical Field]

The present invention relates to a method for establishing a call in a communication network. It also relates to call control nodes configured to participate in establishing a call in a communication network, and to a computer program comprising instructions configured, when executed on a call control node, to cause the call control node to carry out a method for establishing a call in a communication network.

### [Background]

In communication networks, such as telecommunication networks, a call often involves, on the one hand, a control plane or signalling plane and, on the other hand, a user plane. The control plane or signalling plane is in charge of establishing and managing a connection between two points on the network. The user plane is in charge of transporting the user data.

The setting up of a call on the user plane involves selecting nodes, which may be referred to as media gateways (MG or MGW), through which the data will be routed or switched. The media gateways are nodes on the user plane. The selection of the media gateways is performed by nodes, which may be referred to as call control nodes (CCN). The call control nodes are on the control plane. The call control nodes act as media gateway controllers (MGC) since they control which media gateways to be used for the call. A media gateway is in charge of switching the user plane data and in charge of providing in-band equipment, if necessary.

An exemplary communication network including call control nodes and media gateways is a bearer independent circuit-switched (CS) core network described in 3GPP TS 23.205 V7.5.0 (2007-06), 3rd Generation Partnership Project; *Technical Specification Group Core Network and Terminals; Bearer-independent circuit-switched core network;* Stage 2 (Release 7) (available from the 3GPP, Sophia Antipolis, France), herewith referred to as "reference [1]" or "ref. [1]". The core network of reference [1] uses, on the one hand, media switching center (MSC) servers (described for instance in ref. [1], section 5.1.1.1) and gateway media switching center (GMSC) servers (described for instance in ref. [1], section 5.1.1.2), both being call control nodes, and, on the other hand, media gateways (described for instance in ref. [1], section 5.1.1.3). The GMSC server and MSC server provide the call control and mobility management functions, and the media gateway provides the bearer control and transmission resource functions. The media gateway may contain stream manipulating functions and may perform media conversion and framing protocol conversion.

Other exemplary call control nodes include a transit switching center (TSC) and a media gateway control function (MGCF). Exemplary in-band equipments (e.g. media manipulation equipment) of the media gateways include transcoder devices, echo canceller, or tone and announcement devices.

Document US 6 947 747 B1 relates to a call setup for networks with separated call control and bearer control, wherein an identification of a selected media gateway is transmitted in a forward direction.

A plurality of call control nodes may be involved in setting up a call. Call setup information may be signalled between call control nodes using call control protocols such as for example ISUP (ISDN User Part or Integrated Services Digital Network User Part), BICC (Bearer Independent Call Control) or SIP (Session Initiation Protocol). In the event that a call control node selects a media gateway, call control protocols may be provided so that the call control node sends the identifier of the selected media gateway to another call control node (see for instance ref. [1], section 6.1.1.1, wherein the MGW selection may be based on a possibly received MGW-id from the succeeding node). The other call control node has then the opportunity to select the same media gateway for user plane switching. The selection of media gateways has an impact on resource utilization in the nodes and in the communication network.

It is therefore desirable to provide methods and call control nodes which solve or partially solve the above-mentioned problems of selecting media gateways such that resource utilization is optimized.

### [Summary]

Such methods and call control nodes are defined in the independent claims. Advantageous embodiments are defined in the dependent claims.

According to an aspect of the invention, a method for establishing a call in a communication network by selecting media gateways to be used for the call is provided. The media gateways are in a user plane. The method includes a negotiating procedure provided at least with steps wherein a first call control node sends, towards a second call control node, a message identifying media gateways considered eligible for the call to be established. The message includes an identifier indicating that any media gateway in a group of at least two media gateways of the communication network is considered eligible. The message may not include an identifier of any individual media gateway. The identifier included in the message may indicate that any media gateway in the communication network is considered eligible. Alternatively, the identifier included in the message may indicate that any media gateway in a region of the communication network is considered eligible. The negotiating procedure may further be provided with steps wherein the second call control node receives the message from the first call control node; selects, as media gateway to be used for the call to be established, amongst the group of at least two media gateways identified by the received message, a media gateway which the second call control node can select for the call; and sends, towards the first call control node, a message identifying the selected media gateway. The negotiating procedure may further be provided with steps wherein the first call control node receives the message identifying the selected media gateway; and initiates the call to be established using the selected media gateway identified in the received message. The message may further include information, herein referred to as priority information, indicating that at least one media gateway should be preferably selected for the call to be established. The message received by the second call control node may further include information, herein referred to as priority information, indicating that at least one media gateway (4) should be preferably selected for the call to be established; and the second call control node may preferably select one of the at least one media gateway that should be preferably selected for the call to be established.

According to a second aspect of the invention a method, performed by a call control node, for participating in establishing a call in a communication network by selecting media gateways to be used for the call is provided. The media gateways are in a user plane. The method includes a negotiating procedure provided at least with steps wherein the call control node sends, towards another call control node, a message identifying media gateways considered eligible for the call to be established. The message includes an identifier indicating that any media gateway in a group of at least two media gateways of the communication network is considered eligible. The message may not include an identifier of any individual media gateway. The identifier included in the message may indicate that any media gateway in the communication network is considered eligible. Alternatively, the identifier included in the message may indicate that any media gateway in a region of the communication network is considered eligible. The message may further include information, herein referred to as priority information, indicating that at least one media gateway should be preferably selected for the call to be established. The negotiating procedure may further be provided with steps wherein the call control node receives a message identifying a selected media gateway; and initiates the call to be established using the selected media gateway identified in the received message.

According to an aspect of the invention, a method, performed by a call control node, for participating in establishing a call in a communication network by selecting media gateways to be used for the call is provided. The media gateways are in a user plane. The method includes a negotiating procedure provided at least with steps wherein the call control node receives, from another call control node, a message identifying media gateways considered eligible for the call to be established. The message includes an identifier indicating that any media gateway in a group of at least two media gateways of the communication network are considered eligible; selects, as media gateway to be used for the call to be established, amongst the group of at least two media gateways identified by the received message, a media gateway which the call control node can select for the call; and sends, towards the other call control node, a message identifying the selected media gateway. The message received by the call control node may further include information, herein referred to as priority information, indicating that at least one media gateway should be preferably selected for the call to be established; and the call control node may preferably select one of the at least one media gateway that should be preferably selected for the call to be established.

According to an aspect of the invention a call control node configured to participate in establishing a call in a communication network and in negotiating media gateways to be used for the call is provided. The media gateways are in a user plane. The call control node comprises a sender configured to send, towards another call control node, a message identifying media gateways considered eligible for the call to be established. The message includes an identifier indicating that any media gateway in a group of at least two media gateways of the communication network are considered eligible. The message may not include an identifier of any individual media gateway. The identifier included in the message may indicate that any media gateway in the communication network is considered eligible. Alternatively, the identifier included in the message may indicate that any media gateway in a region of the communication network is considered eligible. The call control node may further include: a receiver configured for receiving a message identifying a selected media gateway; and an initiator configured to initiate the call to be established using the selected media gateway identified in the received message.
The message that the sender is configured to send may further include information, herein referred to as priority information, indicating that at least one media gateway should be preferably selected for the call to be established.

According to an aspect of the invention a call control node configured to participate in establishing a call in a communication network and in negotiating media gateways to be used for the call is provided. The media gateways are in a user plane. The call control node includes: a receiver configured for receiving, from another call control node, a message identifying media gateways considered eligible for the call to be established, the message including an identifier indicating that any media gateway in a group of at least two media gateways of the communication network are considered eligible; a selector configured for selecting, as media gateway to be used for the call to be established, amongst the group of at least two media gateways identified by the received message, a media gateway which the call control node can select for the call; and a sender configured for sending, towards the other call control node, a message identifying the selected media gateway. The message that the receiver is configured to receive may further include information, herein referred to as priority information, indicating that at least one media gateway should be preferably selected for the call to be established; and the selector may be configured to preferably select one of the at least one media gateway that should be preferably selected for the call to be established.

According to an aspect of the invention a computer program is provided. The computer program comprises instructions configured, when executed on a call control node, to cause the call control node to carry out any of the methods described above as second aspect of the invention.

In one embodiment, the method is for establishing a call in a communication network by selecting media gateways to be used for the call. The media gateways are in a user plane. The method includes a negotiating procedure provided at least with steps wherein a first call control node in a control plane sends, towards a second call control node in the control plane, a message including an identifier (also referred to herewith as media gateway group identifier) indicating that any media gateway in a group of at least two media gateways of the communication network is considered eligible. In an alternative embodiment, the message identifies a list of at least two media gateways considered eligible for the call to be established.

In this embodiment, the first call control node sends, to the second call control node, information pertaining to which media gateways can be successfully selected by the first call control node for establishing the call in the communication network. Rather than letting the second call control node select, in a somewhat blind manner, a media gateway amongst the media gateways which are available for use by the second call control node for establishing the call, the second call control node receives from the first call control node an identifier of a group of media gateways from which to choose from. The method adds constraints to the media gateway selection on the second call control node side. In doing so, it assists in the selection of an appropriate media gateway which may be commonly used by both the first and second call control nodes, if possible.

Such a selection of a common media gateway for a call to be established enables efficient use of the network resources, since the second call control node receives a priori information as to the capabilities of the first call control node. The use and transmission of a message including an identifier referring to a group of eligible media gateways reduces the amount of information that needs to be exchange during the media gateway negotiation.

A communication network may herewith be any network used for data communication, such as a core network within a mobile communication network, or a fixed telephony communication network. The media gateways constitute the nodes through which the data packets or streams are routed or switched. In one embodiment, the communication network is any one of a circuit-switched core network, a bearer-independent circuit-switched core network, a packet-switched core network, a circuit-switched core network for ATM and/or IP transport, a circuit-switched core network in a GSM and/or UMTS environment, a circuit-switched core network as described in reference [1], and a packet-switch network.

The control plane is a protocol or set of protocols and mechanisms, and by extension the network nodes implementing these mechanisms, for setting up and managing a connection, such as for instance for providing mobility management.

The user plane is a protocol or a set of protocols and mechanisms, and by extension the network nodes implementing these mechanisms, for transporting the user data. In one embodiment, the user plane implements the bearer functionality, such as for instance for providing the bearer control and transmission resources functions.

A call is a connection between at least two parties, such as for instance a calling party and a called party. The connection may be set up to transmit voice, data, video frames, or any other type of data.

A call control node may be a server computer configured for performing functions relating to the management and setup of media gateway nodes in the user plane. The call control node may comprise a processor, a memory unit, and software arranged to be executed on the call control node so that it can perform its functionalities. In one embodiment, the first and second call control nodes are, each, any one of a media switching center server, a gateway media switching center server, and a media gateway control function (MGCF).

A media gateway may be a server computer configured at least for performing the transmission of user data on the user plane. The media gateway may comprise a processing unit, a memory unit and software configured to be executed on the media gateways so that it can perform its functionalities.

In one embodiment, a media gateway is considered eligible for a call to be established by a call control node if the call control node knows the media gateway and is capable of instructing the media gateway to act in the call to be established.

The method enables media gateway negotiation, i.e. the negotiation of a common media gateway, between call control nodes, for instance where a forward bearer setup is applied. A forward bearer setup is a setup wherein the bearer, on the user plane, is set up in the same direction as the call, i.e. from the calling party to the called party. The selection of a common media gateway node improves resource utilization in the network. The method may be applied to an existing protocol, such as a standard BICC or SIP protocol, without impact thereto.

In one embodiment, the first call control node sends, towards the second call control node, the message including a media gateway group identifier in the forward direction. The forward direction is the direction of establishing of the call connection.

By sending the message including the media gateway group identifier in the forward direction, i.e. from the calling party to the called party, an efficient utilization of the network resources is provided when setting up a call. A message which is used in an existing protocol for setting up a connection and which is sent in the forward direction may be used for sending the media gateway group identifier.

In one embodiment, the message sent by the first call control node towards the second call control node does not include an identifier of any individual media gateway. Media gateways are identified as groups. This reduces the amount of information exchange for the purpose of media gateway selection.

In one embodiment, the group identifier indicates that any media gateway in the communication network is considered eligible. Sending such group identifier (which may be referred to as "AnyMGW") alleviates the necessity to send individual identifiers of all media gateways of the network.

In one embodiment, the group identifier indicates that any media gateway in a region of the communication network is considered eligible. Sending such group identifier (which may be referred to as "AnyMGW-Region") alleviates the necessity to send individual identifiers of all media gateways of the region of the network.

In one embodiment, the negotiating procedure is further provided with steps wherein the second call control node receives the message from the first call control node. The second call control node then selects, as media gateway to be used for the call to be established, amongst the group of media gateways identified by the received message, a media gateway which the second call control node can select for the call. It then sends, towards the first call control node, a message identifying the selected media gateway.

In this embodiment, the second call control node takes into account the constraints applicable to the first call control node. It does so by taking into account the group of media gateways considered, by the first call control node, as eligible for the call to be established. The second call control node also takes into account its own constraints. It does so by selecting, from the group identified by the received message, a media gateway that the second node can select for the call. More precisely, the second call control node selects, from the group, if possible, a media gateway to be used for the call to be established. It then sends back a message identifying the selected media gateway towards the first call control node. The first call control node can then select the same media gateway for the call to be established, i.e. the media gateway which has been agreed upon by the first and second call control nodes.

This embodiment provides an efficient implementation for minimizing the number of media gateways used for a call, so as to efficiently using the network resources.

In this embodiment, the second call control node removes, from the list identified by the received message, the media gateways which the second call control node cannot select for the call, and selects, from the list, a media gateway to be used for the call to be established. The step of removing may however lead to an empty list. If so, the selection, from the list, is not possible. The procedure may however continue as follows. The second call control node selects a media gateway according to its local constraints and sends, towards the first call control node, a message identifying the selected media gateway. The first call control node identifies that the selected media gateway does not belong to the originally transmitted list, and selects a media gateway from the originally transmitted list. This case does not lead to the use of a common media gateway by the first and second nodes.

In one embodiment, the negotiating procedure is provided with steps wherein the first call control node receives the message identifying the selected media gateway. Upon receiving said message, the first call control node completes, or attempts to complete, the call to be established using the selected media gateway identifier in the received message. This provides efficient utilization of the network resources. Using the teaching of reference [1] for instance, a skilled person would understand how to complete, or attempt to complete, a call using a media gateway identifier.

In one embodiment, the negotiating procedure is further provided with steps wherein a third call control node receives a message sent by a first call control node towards a second call control node. The third call control node is referred to herewith as an intermediary call control node. As mentioned above, the message includes a group identifier identifying a group of at least two media gateways considered, by the first call control node, eligible for the call to be established. Upon reception of the message, the third call control node approves the group of media gateways as eligible by the third node, or creates a list of media gateways by retaining in the list, amongst the group identified by the received message, only the media gateways which it can select for the call. It then forwards, towards the second call control node, a message identifying the group, or alternatively the newly created list. The group, or alternatively the list, identified in the message forwarded from the third node towards the second node identifies a group, or alternatively a list, of media gateways considered, jointly by the first and third nodes, as eligible for the call to be established.

This embodiment further enables the constraints of an intermediary call control node, i.e. a third call control node, to be taken into account when selecting a media gateway for a call to be established.

The processing by the third call control node may lead to an unmodified list, maintained as received (if all the media gateways of the list are considered eligible by the third call control node), to a modified list maintained in a modified form but not empty (if some of the media gateways are considered eligible by the third call control node and other are considered ineligible), or to an empty list (if all the media gateways are considered ineligible). If the third case (empty list obtained), the following may happen. The third call control node may create a new list and starts a new media gateway negotiation towards a succeeding call control node, such as towards the second call control node.

In that case, the list identified in the message forwarded from the third node towards the second node is not a list of media gateways considered, jointly by the first and third nodes, as eligible for the call to be established, but only a list of media gateways considered eligible by the third node. Alternatively (still in the third case), the third call control node may select a media gateway according to its local constraints and send, towards the second call control node, a message identifying this selected media gateway, as a proposed common media gateway to be used by the third and second call control nodes. In yet another alternative (still in the third case), the third call control node may request the second call control node to select a media gateway according to its local constraints and to send a message identifying this selected media gateway, as a proposed common media gateway to be used by the third and second call control nodes.

This embodiment applies to intermediary call control nodes which have the ability to control media gateways. A signalling plane node, such as a call mediation node, which does not control media gateways should not participate in the media gateway negotiation, should not interfere with the negotiation and should only forward the message without removing items from the list.

In one embodiment, the negotiating procedure is further provided with steps wherein a third call control node receives, from the second call control node, a message identifying a selected media gateway. The third call control node then selects, as a media gateway to be used for the call to be established, the media gateway identified in the received message. The third call control node then forwards, towards the first call control node, the message identifying the selected media gateway.

This embodiment enables to instruct an intermediary call control node to use the media gateway selected by the second call control node.

The invention also relates to a method performed by each one of the call control nodes in the control plane, to participate in establishing a call in a communication network by selecting media gateways to be used for the call. Namely, the invention relates to a method performed by a first call control node initially sending a message including a group identifier identifying a group of at least two media gateways considered to be eligible for the call to be established. The method also relates to a method wherein a second call control node receives a message including a group identifier identifying a group of at least two media gateways considered eligible for the call to be established by the first call control node, selects, amongst the media gateways belonging to the group, a media gateway to be used for the call to be established, and sends back towards the first call control node a message identifying the selected media gateway. The invention further relates to a method performed by a third call control node, i.e. an intermediary call control node, to forward in the direction of a second call control node a message including a group identifier identifying an above-described group, or transforming the group into a list it necessary or desired, or to forward in the direction of a first call control node a message identifying a selected media gateway.

The invention further relates to the call control nodes themselves, configured to carry out in operation the above-described methods. The invention further relates to a computer program comprising instructions configured, when executed on a call control node, to cause the call control node to carry out any one of the above-described methods, or a portion thereof.

### [Brief description of the drawings]

Embodiments of the present invention shall now be described, in conjunction with the appended figures, in which:
Figs. 1 and 2 schematically illustrate two exemplary call setting up scenarios to assist in understanding some problems addressed by the invention;
Figs. 3a and 3b illustrate respectively a method and a network configuration according to one embodiment of the invention, wherein a first call control node sends a message towards a second call control node in the process of establishing a call within a communication network;
Figs. 4a and 4b illustrate respectively a method and a network configuration according to one embodiment of the invention, wherein a first call control node sends a message towards a second call control node, which receives it, processes it, and sends a message back towards the first call control node;
Figs. 5a and 5b illustrate respectively a method and a network configuration according to one embodiment of the invention, wherein a first call control note sends a message to a second call control node, the second call control node receives the message, processes it, and sends a message back to the first call control node, which then receives the message and completes, or attempts to complete, a call;
Figs. 6a and 6b illustrate respectively a method and a network configuration according to one embodiment of the invention, wherein a first call control node and an intermediate call control node participate in establishing a call in a communication network;
Figs. 7a and 7b illustrate respectively a method and a network configuration according to one embodiment of the invention, wherein a first, second and third call control nodes participate in establishing a call in a communication network;
Fig. 8a and 8b illustrate respectively a method and a network configuration according to one embodiment of the invention, wherein a first, an intermediary and a second call control nodes participate in establishing a call in a communication network;
Fig. 9 illustrates three call control nodes participating in establishing a call in a communication network, according to one embodiment of the invention;
Figs. 10a, 10b, 11, 12a and 12b illustrate call control nodes according to embodiments of the invention;
Fig. 13 illustrates a network configuration and a method according to one embodiment of the invention, without transfer of media gateway priority information;
Figs. 14, 15, 16 and 17 illustrate network configurations and methods according to embodiments of the invention, with transfer of media gateway priority information;
Fig. 18 illustrates a network configuration and method according to one embodiment of the invention, including transfer of media gateway group identifiers.

### [Detailed description]

The present invention shall now be described in conjunction with specific embodiments. It may be noted that these specific embodiments serve to provide the skilled person with a better understanding, but are not intended to in any way restrict the scope of the invention, which is defined by the appended claims.

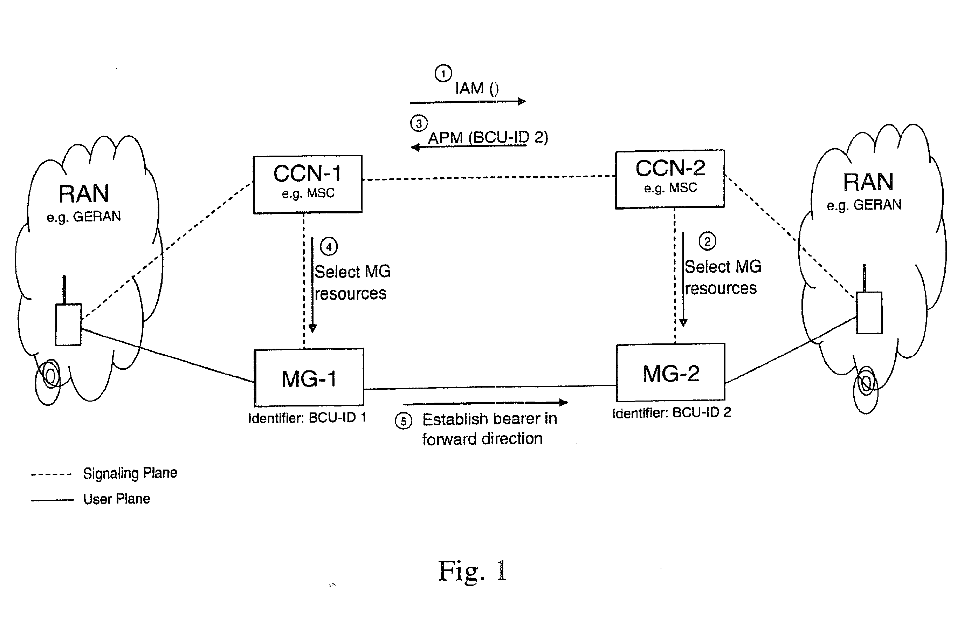

Fig. 1 schematically represents an exemplary call setting up scenario to assist in understanding some problems underlying the invention.

The illustrated scenario is applicable to telephone calls (mobile or fixed), or more generally telecommunications connections, and uses a forward bearer setup procedure. Here, the bearer is established from the calling side towards the called side. On the left-hand side of the schema, an originating radio access network (RAN, e.g. GERAN which stands for GSM EDGE Radio Access Network) is illustrated (calling side, i.e. side of the calling party). On the right-hand side of the schema, a remote radio access network (RAN, e.g. GERAN) is illustrated (called side, i.e. side of the called party).

A preceding call control node CCN-1 and a succeeding call control node CCN-2 are part of the control plane, and are each controlling one media gateway node, respectively media gateway node MG-1 and media gateway node MG-2, for user plane switching. In order to achieve forward bearer setup, the succeeding call control node CCN-2 selects a media gateway (MG) first and then sends a media gateway identifier and bearer address information backwards to the preceding call control node CCN-1. The preceding call control node CCN-1 then selects the media gateway and initiates the bearer setup procedure.

More particularly, Fig. 1 illustrates the principle behind forward bearer setup using the BICC protocol as exemplary call control protocol, to assist in understanding some problems underlying the invention. The steps leading to the setting up of a call are as follows:
(1) An initial addressing message (IAM) is sent from the preceding call control node CCN-1 to the succeeding call control node CCN-2 providing call setup information. This step is illustrated by the arrow associated with the surrounded reference 1 and the label "IAM()".
(2) The succeeding call control node CCN-2 selects a media gateway node (here, media gateway node MG-2) and seizes the media gateway resources for the connection end point. This step is illustrated by the arrow associated with the surrounded reference 2 and the label "Select MG resources".
(3) The identifier of the media gateway MG-2, i.e. BCU-ID 2, is sent backwards from the succeeding call control node CCN-2 to the preceding call control node CCN-1. This step is illustrated by the arrow associated with the surrounded reference 3 and the label "APM (BCU-ID 2)".
(4) The preceding call control node CCN-1 selects a media gateway node MG-1 and seizes the media gateway resources for the connection end point. This step is illustrated by the arrow associated with the surrounded reference 4 and the label "Select MG resources".
(5) The preceding call control node CCN-1 triggers the start of the bearer establishment procedure by the media gateway MG-1. This step is illustrated by the arrow associated with the surrounded reference 5 and the label "Establish bearer in forward direction". When Internet Protocol (IP) is used as user plane transport protocol and BICC is used as call control protocol, the bearer setup messages are tunnelled via call control nodes CCN-1 and CCN-2 (not illustrated in Fig. 1).

In practice, it happens frequently that the succeeding call control node CCN-2 has the opportunity to select from a set of a plurality of media gateway nodes without knowing which media gateway nodes can be selected in the preceding call control node CCN-1. Consequently, there is no guarantee that the media gateway node selected in the succeeding call control node CCN-2 can be selected in the preceding call control node CCN-1 as well. If the preceding call control node CCN-1 and the succeeding call control node CCN-2 do not select a common media gateway node MG, unnecessary long user plane routes may be obtained. This causes inefficient use of the network resources.

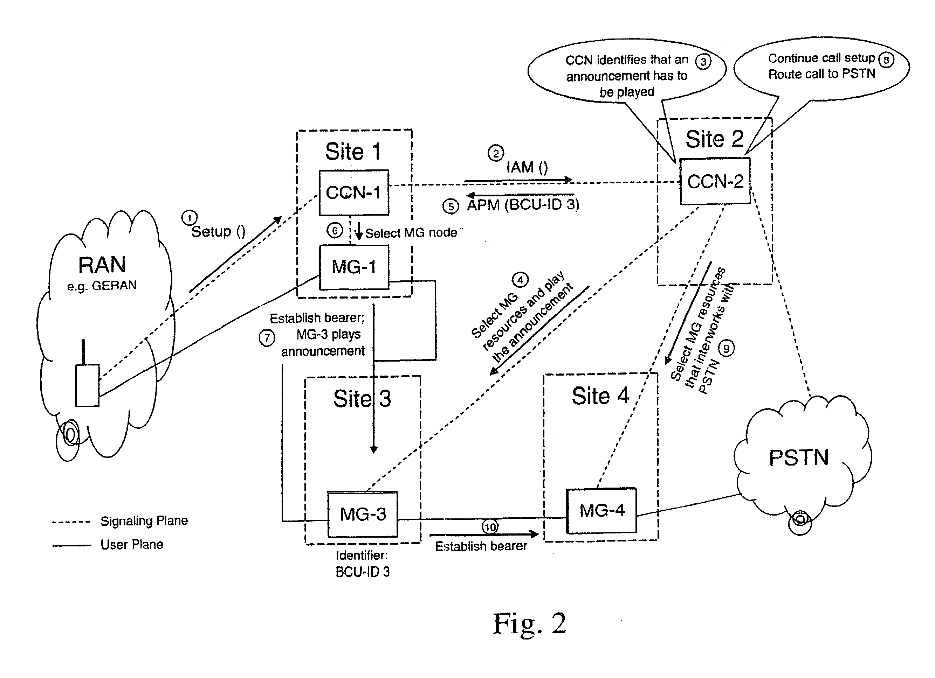

Fig. 2 shows one possible exemplary situation which may occur. The illustrated exemplary situation assists in understanding in more details some problems underlying the invention. In this situation, it is assumed that the succeeding call control node CCN-2 has to play an announcement (see for instance ref. [1], section 14.1.1), for example due to intelligent networking (IN) interworking, before the call can be routed to the destination network, e.g. a public switched telephone network (PSTN). At the end of the call setup, media gateways nodes MG on three sites are involved in the call.

In Fig. 2, the dashed line depicts a signalling or control plane data transmission. The plain line depicts a user plane data transmission.

The steps leading to the setting up of a call are as follows:
(1) A setup message is sent from the mobile terminal (illustrated in the radio access network RAN on the left-hand side of the schema) to a preceding call control node CCN-1 in a site 1. A site is a physical location wherein the functionalities associated with one or more nodes are gathered. This step is illustrated by the arrow associated with the surrounded reference 1 and the label "Setup()".
(2) The preceding call control node CCN-1 sends a BICC IAM message to a succeeding call control node CCN-2 in a site 2. This step is illustrated by the arrow associated with the surrounded reference 2 and the label "IAM()".
(3) The succeeding call control node CCN-2 has to play an announcement, for example due to Intelligent Networking (IN) interworking. This step is illustrated by the word balloon containing the surrounded reference 3 and the label "CCN identifies that an announcement has to be played".
(4) The succeeding call control node CCN-2 selects a media gateway node to establish the bearer (user plane) and to play an announcement. In this example, the succeeding call control node CCN-2 selects the media gateway MG-3 in the site 3. This step is illustrated by the arrow associated with the surrounded reference 4 and the label "Select MG resources and play the announcement".
(5) The succeeding call control node CCN-2 sends the identifier of media gateway MG-3 backwards to the preceding call control node CCN-1. This step is illustrated by the arrow associated with the surrounded reference 5 and the label "APM (BCU-ID 3)".
(6) In this example, it is assumed that the preceding call control node CCN-1 cannot select media gateway node MG-3. Consequently, the preceding call control node CCN-1 selects another media gateway node, for example the media gateway node MG-1 in the site 1. This step is illustrated by the arrow associated with the surrounded reference 6 and the label "Select MG node".
(7) The bearer is established between media gateway node MG-1 in the site 1 and media gateway node MG-3 in the site 3 and the announcement is played. This step is illustrated by the arrow associated with the surrounded reference 7 and the label "Establish bearer; MG-3 plays announcement".
(8) The succeeding call control node CCN-2 continues the call setup. It identifies that the call has to be routed to a public switched telephone network (PSTN) illustrated on the bottom right-hand corner of Fig. 2. This step is illustrated by the word balloon containing the surrounded reference 8 and the label "Continue call setup, Route call to PSTN".
(9) The succeeding call control node CCN-2 selects a media gateway node MG that can connect the user plane to public switched telephone network (PSTN). Here media gateway node MG-4 in site 4 is selected by the succeeding call control node CCN-2. This step is illustrated by the arrow associated with the surrounded reference 9 and the label "Select MG resources that interworks with PSTN".
(10) The bearer is finally established between media gateway node MG-3 and media gateway node MG-4. This step is illustrated by the arrow associated with the surrounded reference 10 and the label "Establish bearer".

It follows that the call setup involves three sites, namely site 1, wherein media gateway node MGW-1 is located, site 3, wherein media gateway node MGW-3 is located, and site 4, wherein media gateway node MGW-4 is located.

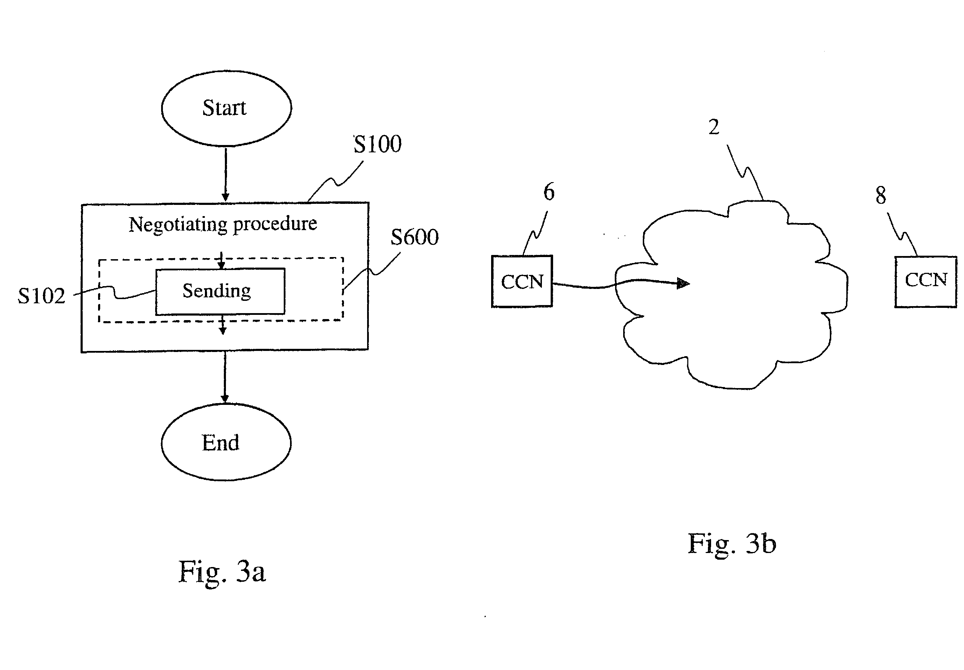

Figs. 3a and 3b illustrate respectively a method and a network configuration according to one embodiment of the invention. A first call control node (CCN) 6 starts a negotiating procedure S100. The portion S600 of the negotiating procedure S100 performed by the call control node 6 comprises a step of sending S102 a message identifying a list of at least two media gateways 4 (not illustrated in Figs. 3a and 3b) towards a second call control node (CCN) 8 through a communication network 2.

This enables the first call control node 6 to inform the second call control node 8 as to which the media gateways 4 the first call control node 6 can select for the call to be established. The second call control node 8 has then the opportunity to take into account the proposed list of media gateways 4 for the call to be established.

The embodiment illustrated in Figs. 3a and 3b notably includes a sub-embodiment wherein the second call control node 8 is not provided with capabilities enabling it to understand the message identifying the list of at least two media gateways. A smooth transition from a second call control node 8 which is not provided with capabilities enabling it to understand the message identifying the list of at least two media gateways, to a second call control node 8 which is provided with capabilities to understand such a message, is provided, without the need for modifying the first call control node 6.

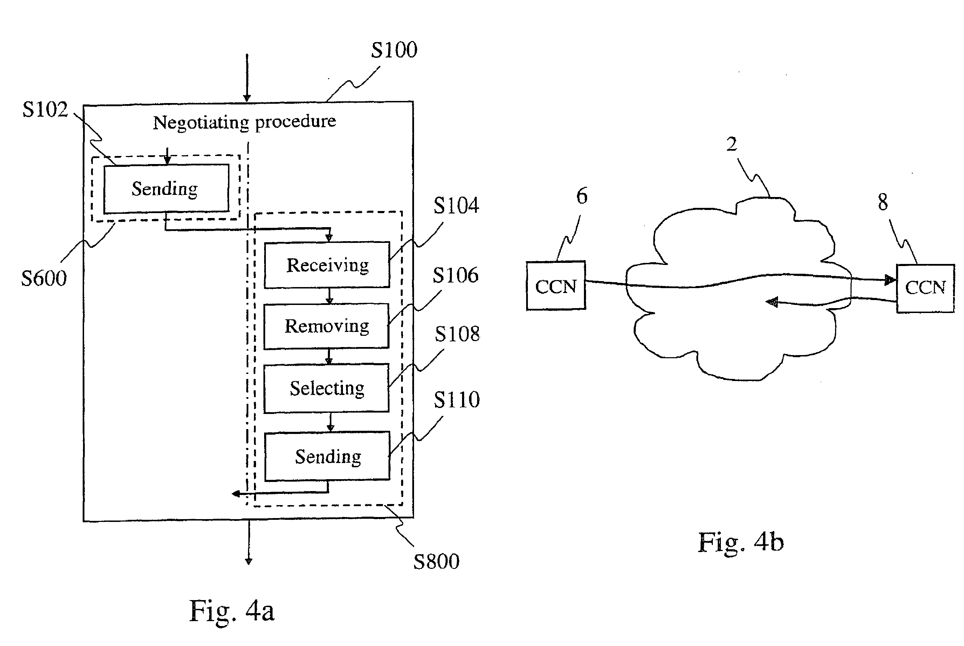

Fig. 4a and 4b illustrate respectively a method and a network configuration according to one embodiment of the invention. The negotiating procedure S100 includes a portion S600 performed by the first call control node 6 and a portion S800 performed by the second call control node 8. The first call control node 6 sends S102 towards the second call control node 8 through a communication network 2 a message identifying a list of at least two media gateways 4 that the first call control node 6 can select for the call to be established.

In the portion S800 of the negotiating procedure S100, the second call control node 8 receives S104 the message identifying the list of at least two media gateways 4 considered by the first call control node 6 eligible for the call to be established. The second call control node 8 removes S106 from the list the media gateway(s) which the node 8 cannot select for the call. The second call control node 8 then selects S108, from the possibly modified list, a media gateway 4 to be used for the call to be established. The second call control node 8 finally sends S110, towards the first call control node 6, a message identifying the selected media gateway 4.

With respect to step S106, the expression "media gateway(s)" herewith means one media gateway or a plurality of them. However, if all media gateways of the list identified by the message are determined to be selectable for the call, no media gateway identifiers need to be removed by the call control node. Therefore, while the negotiating procedure S100 includes, i.e. provides, the step of removing S106, when the procedure S100 is actually executed, the step of removing S106 is optional and may amount to a validation step without an actual removal of identifiers when one or more conditions are met. In one embodiment, the negotiating procedure S100 includes a determining procedure (not illustrated) for determining whether each of the media gateways 4 identified by the received message are selectable for the call, and, if not, for removing those which are not selectable. This also applies to later described step S118.

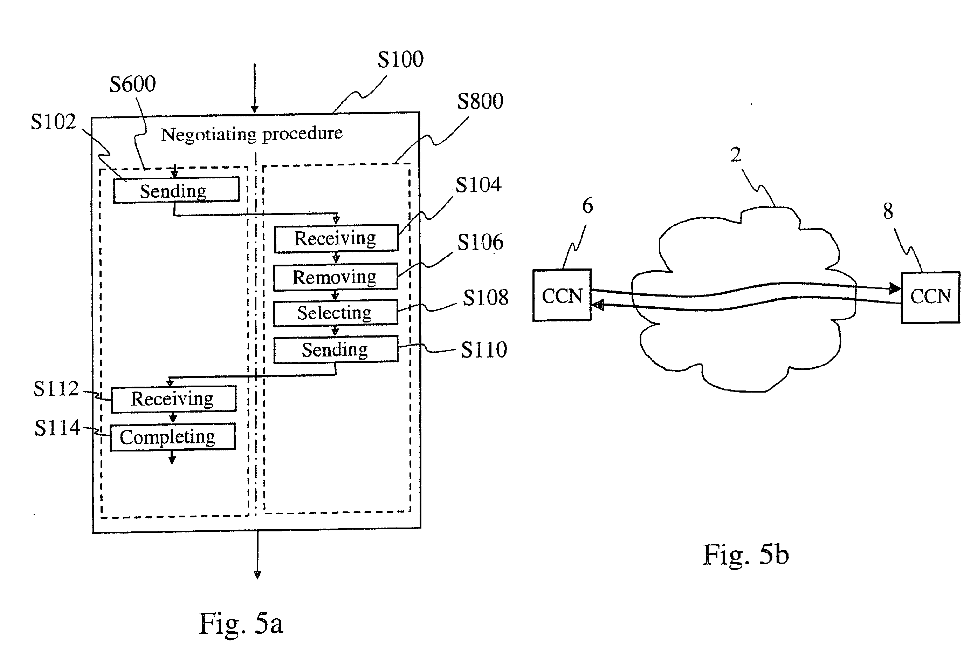

Figs. 5a and 5b illustrate respectively a method and a network configuration according to one embodiment of the invention. Compared to Figs. 4a and 4b, the method and configuration of Figs. 5a and 5b additionally illustrate a step of receiving S112, by the first call control node 6, the message identifying the selected media gateway and a step of completing S114, or attempting to complete, a call to be established using the selected media gateway identified in the received message. Figs. 5a and 5b illustrate a negotiating procedure S100 including a two-way control plane exchange of information from a first call control node 6 to a second call control node 8 and then back from the second node 8 to the first node 6.

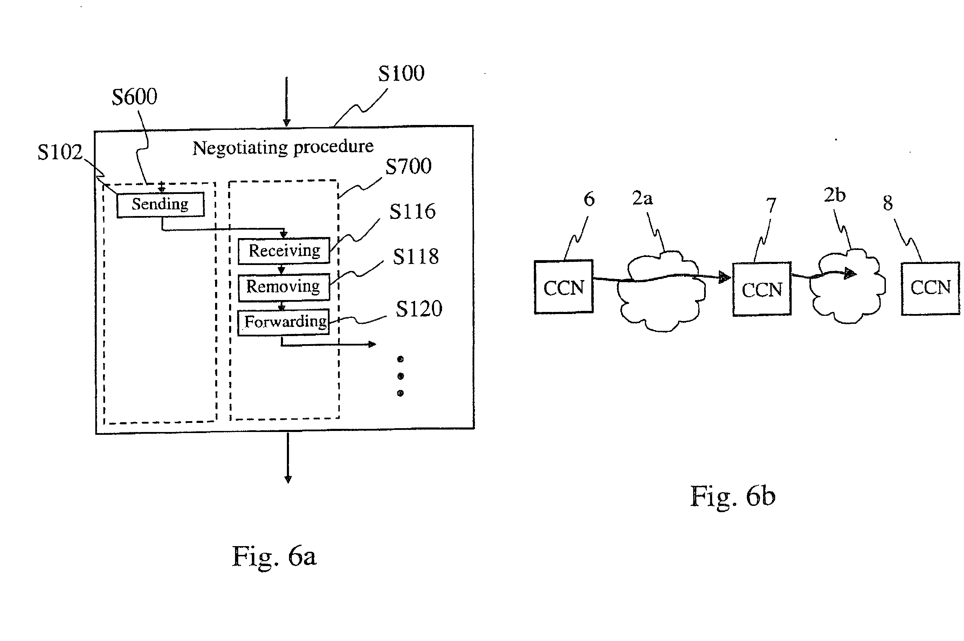

Figs. 6a and 6b illustrate respectively a method and a network configuration according to one embodiment of the invention. In particular, a negotiating procedure S100 comprises a portion S600 performed by a first call control node 6 and a portion S700 performed by a third call control node 7, or intermediate call control node, for participating in establishing a call.

The first call control node 6 sends S102 towards a second call control node 8, through a first portion 2a of a communication network 2, a message identifying a list of at least two media gateways 4 considered by the first node 6 as eligible for the call to be established. While the message is sent towards the second call control node 8, the message is transmitted via a third call control node 7, which receives S116 the message. The third call control node 7 then removes S118, from the list, the media gateway(s) 4 which it cannot select for the call. If all media gateways 4 of the list are eligible for the call to be established by the third node 7, no media gateway 4 is removed from the list. The step of removing S118 is therefore a validation step. The third node 7 then forwards S120 the message identifying the list, which may have been modified, towards the second call control node 8, through a second portion 2b of the communication network 2.

As explained similarly with reference to Figs. 3a and 3b, the embodiment illustrated in Figs. 6a and 6b notably includes a sub-embodiment wherein the second call control node 8 is not provided with capabilities enabling it to understand the message identifying the list of at least two media gateways. A smooth transition from a non-enabled second call control node 8 to an enabled node 8, is provided, without the need for modifying the first call control node 6 nor the third call control node 7, which are both ready for the negotiation procedure S100.

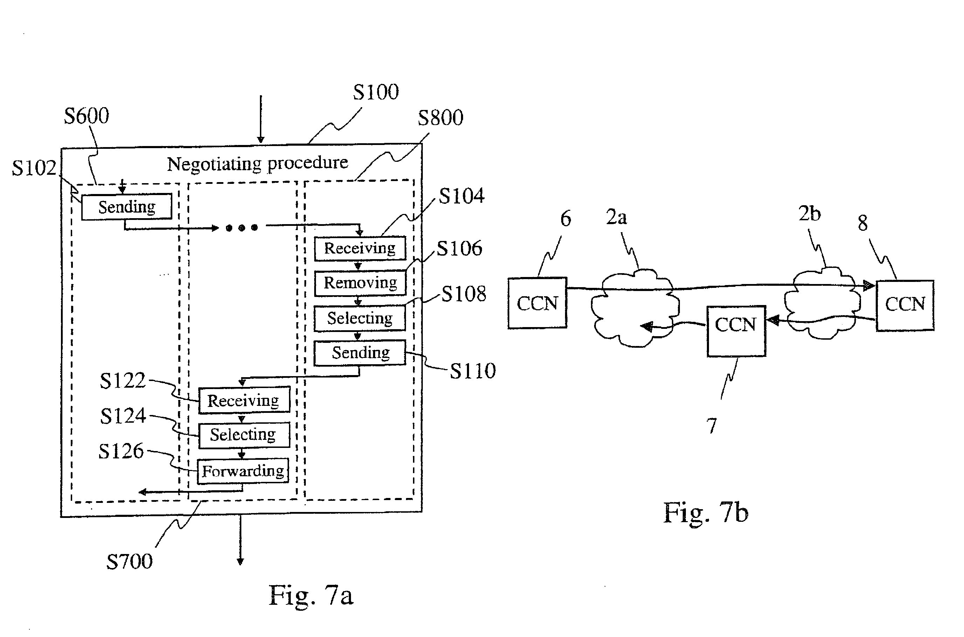

Figs. 7a and 7b illustrate respectively a method and a network configuration according to one embodiment of the invention. In this embodiment, the negotiating procedure S100 comprises a portion S600 performed by the first call control node 6, a portion S700 performed by the third call control node 7, and a portion S800 performed by a second call control node 8.

Namely, the first call control node 6 sends a message towards a second call control node 8 via the third call control node 7, in the manner illustrated notably with reference to Fig. 6a and 6b. The transition in the forward direction through the third call control node 7 is not illustrated in Fig. 7a for clarity, and is only represented by three dots: "...". As explained above, the message identifies a list of at least two media gateways 4 considered eligible jointly by the first node 6 and the third node 7 for the call to be established. The second call control node 8 receives S104 and processes S106, S108 the list before sending S110 a message identifying a selected media gateway 4 back towards the first call control node 6. While the message identifying the selected media gateway 4 is sent towards the first node 6 by the second node 8, the message is transmitted via the third call control node 7. The third node 7 receives S122 the message identifying the selected media gateway 4. The third call control node selects S124 as the media gateway 4 to be used for the call to be established the media gateway 4 identified by the message sent from the second node 8. The message is then forwarded S126 towards the first call control node 6.

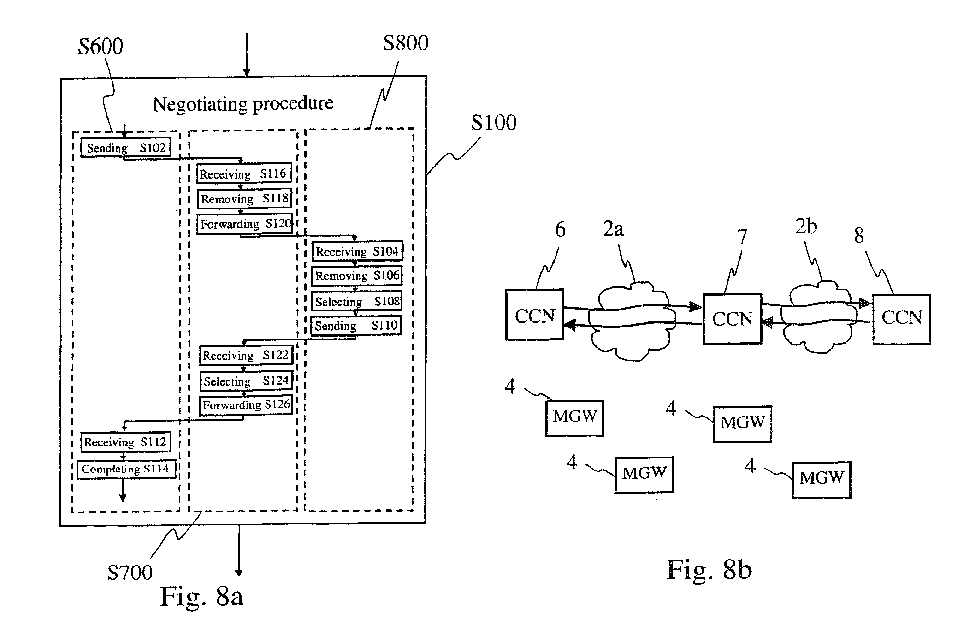

Figs. 8a and 8b illustrate respectively a method and a network configuration according to one embodiment of the invention. Fig. 8b notably illustrates a series of exemplary media gateways 4.

The method includes a negotiating procedure S100 including a portion S600 performed by a first call control node 6, a portion S700 performed by a third call control node 7, and a portion S800 performed by the second call control node 8. Each call control node, namely the first call control node 6, the second call control node 8 and the third call control node 7, participates in establishing the call by performing their respective portion S600, S800 and S700 of the negotiating procedure S100.

In more details, the first call control node 6 sends S102 a message identifying a list of at least two media gateways 4 considered eligible for the call to be established. The message is sent S102, by the first node 6, on a portion 2a of the communication network 2. The message sent from the first node 6 towards the second call control node 8 is received S116 by the third call control node 7. The third node 7 removes S118, from the list identified by the received message, the media gateway(s) 4 which it cannot select for the call (as explained above, if all media gateways can be selected, no media gateway is removed). It then forwards S120, towards the second call control node 8, a message identifying the list, which has been possibly modified. The message is sent S120, by the third node 7, on a portion 2b of the communication network 2.

The second call control node 8 receives S104 the message from the first call control node 6 via the third call control node 7. The second node 8 removes S106, from the list identified by the received message, the media gateway(s) 4 which it cannot select for the call (as explained above, also at this stage if all media gateways can be selected, no media gateway is removed). It then selects S108, from the list, a media gateway 4 to be used for the call to be established. The second call control node 8 then sends S110, towards the first call control node 6, a message identifying the selected media gateway 4. The message is sent S110, by the second node 8, on the portion 2b of the communication network 2.

While the message identifying the selected media gateway 4 is sent by the second call control node 8 towards the first call control node 6, the message is first received by the third call control node 7. The third node 7 receives S122 the message identifying the selected media gateway 4, and selects S124, as media gateway to be used for the call to be established, the media gateway 4 identified in the received message. It then forwards S126, towards the first call control node 6, the message identifying the selected media gateway 4. The message is sent on the portion 2a of the communication network 2.

The first call control node 6 receives S112 the message identifying the selected media gateway 4 and completes S114, or attempts to complete, the call to be established using the selected media gateway 4 identified in the received message.

The call can therefore be established by taking into account the constraints of the first, second and third call control nodes 6, 8, 7. While Figs. 8a and 8b illustrate an embodiment wherein one intermediary call control node 7 is used, more than one intermediary call control nodes may participate in establishing a call. A first intermediary call control node (where no intermediary call control node exists on a path between a first and a second call control nodes 6, 8) or an additional intermediary call control node (where one or more intermediary call control nodes already exist on a path between a first and a second call control nodes 6, 8) may be added at any time within the communication network 2, without the need to modify the first or second call control nodes (or any already existing intermediary call control node, if any).

When used herewith, the word "towards" in expressions such as "sending a message towards a destination node" or the like does not exclude one or more transitions of the message through intermediary nodes before reaching the destination node. Cases where the message does not reach the destination node for any reasons (e.g. communication failure), while sent towards it, are neither excluded. Likewise, the word "from" in expressions such as "receiving a message from a source node" or the like does not exclude one or more transitions of the message through intermediary nodes between the transmission of the message by the source node and the step of receiving the message.

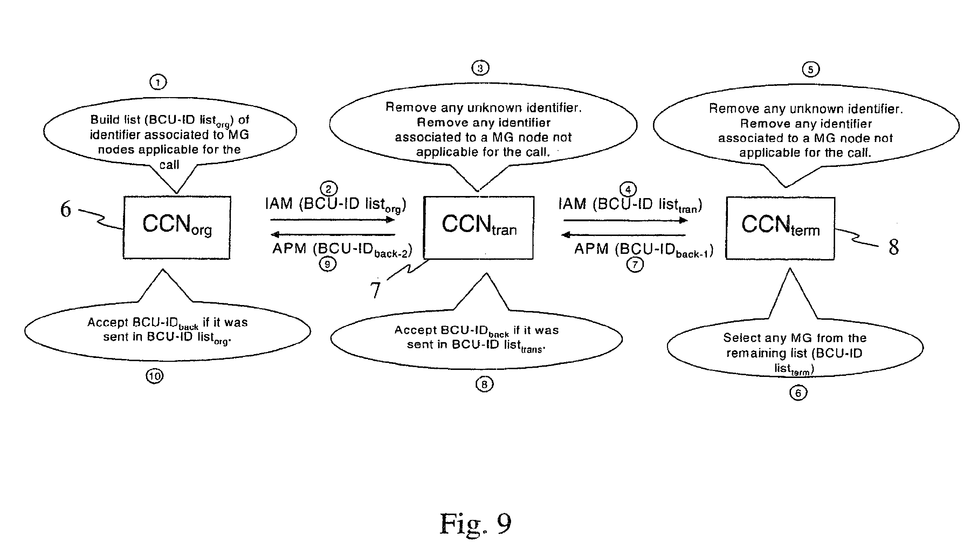

Fig. 9 illustrates a method according to one embodiment of the invention.

This embodiment of the invention provides a procedure to negotiate between call control nodes the media gateway nodes that can be used in a call. This negotiation procedure S100 provides the opportunity for one or more subsequent call control nodes to agree on a common media gateway node. Such a selection improves the usage of resources in the network.

A call control node 6 that sends a call setup message (e.g. IAM in BICC) in forward direction adds, to this message, a list of at least two media gateway nodes 4 which are eligible for the call.

Any subsequent call control node 7, 8 removes, from the list, the media gateway nodes 4 which the call control node 7, 8 cannot select for the call. No media gateway node 4 is removed if they can all be selected. A call control node that does not control any media gateway (e.g. a call mediation node) transparently transfers the list as well.

A call control node that has to establish the user plane, for example because an announcement has to be played, selects a media gateway node from the negotiated list of media gateway nodes. The identifier of the selected media gateway node 4 is sent in backward direction giving the preceding call control node 6, 7 the opportunity to select the same media gateway node 4.

More specifically, Fig. 9 illustrates the media gateway node selection or negotiation.

Instead of sending a list of media gateway node identifiers, it is possible to send as well an identifier for a group of media gateway nodes 4. In case an intermediate node 7 wants to remove an identifier BCU-ID from this list, which is in fact in this case an identifier for a group of media gateway nodes 4, it has to select a new identifier representing this modified list of identifiers BCU-IDs.

In one embodiment, the method of the invention is applicable when a media gateway node 4 is selected by a succeeding call control node 4 first, for example in BICC using forward bearer setup procedure. For the following discussion with reference to Fig. 9, it is assumed that a forward bearer setup is used.

The naming of the nodes 4, lists and other items is taken from Fig. 1.

A call control node CCN_{org} 6, herewith referred to as originating call control node CCN_{org} 6 (which corresponds to the first call control node 6, as previously described), starts the media gateway node negotiation or selection and is configured to perform the following steps:
Step (1): The originating call control node CCN_{org} 6 builds a list of identifiers of media gateway (MG) nodes that can be used to establish the call. The list is herewith referred to as BCU-ID list_{org}. This is illustrated by the word balloon associated with the surrounded reference 1 and the label "Build list (BCU-ID list_{org}) of identifiers associated to MG nodes applicable to the call". The list is added to the call setup message, which is sent to the next call control node (CCN). This is illustrated by the arrow associated with the surrounded reference 2 and the label "IAM (BCU-ID list_{org})". The next call control node is either an intermediate call control node CCNₜᵣₐₙ or a terminating call control node CCNₜₑᵣₘ.
Step (2): When the originating call control node CCN_{org} 6 receives a backward message, as illustrated by the arrow associated with the surrounded reference 9 and the label "APM (BCU-ID_{back-2})", then
   Step (2.1): If the message includes a media gateway node identifier BCU-ID_{back-2}, the originating call control node CCN_{org} 6 validates if the identifier is specified in the original list BCU-ID list_{org}.
      Step (2.1.1): If the received identifier is specified in the original list, the originating call control node CCN_{org} 6 selects this media gateway node 4 for call establishment. This is illustrated by the word balloon associated with the surrounded reference 10 and the label "Accept BCU-ID_{back} if it was sent in BCU-ID list_{org}".
      Step (2.1.2): Otherwise, the originating call control node CCN_{org} 6 selects for call establishment any media gateway node 4 from the original list BCU-ID list_{org}.
   Step (2.2): If the message does not include a media gateway node identifier, the originating call control node CCN_{org} 6 selects, for call establishment, any one of the media gateway nodes 4 from the original list BCU-ID list_{org}. In one embodiment, receiving a backward message without a media gateway identifier is not allowed and may lead to a setup failure.

For example, if the BICC protocol is used as call control protocol, the list BCU-ID list_{org} is added to the initial addressing message (IAM) message. The received identifier BCU-ID_{back} is received in an acknowledge path message (APM) message.

In one embodiment, a call control node (call mediation node, not illustrated) that does not control media gateway nodes transparently transfers the list of media gateway node identifiers.

A call control node that transfers the call setup message but has to select a media gateway node for the call is referred to as an intermediary call control node CCNₜᵣₐₙₛ (which corresponds to the third call control node 7, as previously described). Such call control node 7 performs the following steps:
Step (1): The intermediary call control node CCNₜᵣₐₙₛ 7 receives a call setup message (e.g. initial addressing message (IAM) message in BICC). This is illustrated by the arrow associated with the surrounded reference 2 and the label "IAM (BCU-ID list_{org})".
   Step (1.1): If this message includes a list of media gateway node identifiers BCU-ID list_{org}, the intermediary call control node CCNₜᵣₐₙₛ 7 performs the following steps:
      Step (1.1.1): The intermediary call control node CCNₜᵣₐₙₛ 7 removes from the list any unknown identifier BCU-ID. If all media gateway node identifiers BCU-ID are known, no identifier is removed.
      Step (1.1.2): The intermediary call control node CCNₜᵣₐₙₛ 7 removes from the list any identifier BCU-ID that is associated to a media gateway node 4 that cannot be used for the call by the intermediary call control node CCNₜᵣₐₙₛ 7. If all media gateway node identifiers BCU-ID can be used, no identifier is removed.
      Steps (1.1.1) and (1.1.2) are illustrated by word balloon associated with the surrounded reference 3 and the label "Remove any unknown identifier. Remove any identifier associated to a MG node not applicable for the call".
      Step (1.1.3): The intermediary call control node CCNₜᵣₐₙₛ 7 processes the remaining list BCU-ID listₜᵣₐₙₛ as follows :
         Step (1.1.3.1): If there is at least one element left in the list, the intermediary call control node CCNₜᵣₐₙₛ 7 forwards the list BCU-ID listₜᵣₐₙₛ in the call setup message IAM sent to the succeeding call control node. This is illustrated by the arrow associated with the surrounded reference 4 and the label "IMAM (BCU-ID listₜᵣₐₙ)".
         Step (1.1.3.2): If the list is empty, the intermediary call control node CCNₜᵣₐₙₛ 7 starts media gateway node negotiation towards the succeeding call control node. The intermediary call control node CCNₜᵣₐₙₛ 7 builds and sends a BCU-ID list as described for the originating call control node CCN_{org}. In other words, the intermediary call control node CCNₜᵣₐₙₛ 7 acts as originating call control node CCN_{org} in that case.
   Step (1.2): If the received call setup message does not include a list of media gateway node identifiers BCU-ID list_{org}, the intermediary call control node CCNₜᵣₐₙₛ 7 starts media gateway node negotiation as described above for the originating call control node CCN_{org} 6. In other words, also in this case, the intermediary call control node CCNₜᵣₐₙₛ 7 acts as if it was an originating call control node CCN_{org}.
Step (2): When the intermediary call control node CCNₜᵣₐₙₛ 7 receives a backward message, as illustrated by the arrow associated with the surrounded reference 7 and the label "APM (BCU-ID_{back-1})", it performs the following steps:
   Step (2.1): If the message includes a media gateway node identifier BCU-ID_{back-1}, the intermediary call control node CCNₜᵣₐₙₛ 7 validates if the identifier is specified in the previously forwarded list (BCU-ID listₜᵣₐₙₛ).
      Step (2.1.1): If the received identifier is specified in the forwarded list BCU-ID listₜᵣₐₙₛ, the intermediary call control node CCNₜᵣₐₙₛ 7 selects the media gateway node 4 for call establishment. This is illustrated by the word balloon associated with the surrounded reference 8 and the label "Accept BCU-ID_{back} if it was sent in BCU-ID listₜᵣₐₙₛ".
      Step (2.1.2): Otherwise, the intermediary call control node CCNₜᵣₐₙₛ 7 selects for call establishment any one of the media gateway nodes 4 that are listed in the list of media gateways BCU-ID listₜᵣₐₙₛ, which was previously sent. In one embodiment, this also applies to the case where the returned media gateway was an element in the list BCU-ID list-tran and step 2.1.1 was executed, but for some reasons it was not possible to select this media gateway (e.g. there was an error during media gateway seizure).
   Step (2.2): If the backward message does not include a media gateway node identifier,
      Step (2.2.1): The intermediary call control node CCNₜᵣₐₙₛ 7 selects for the call establishment any media gateway node 4 that is listed in the list BCU-ID listₜᵣₐₙₛ, which was previously sent.
         In one embodiment, the call setup fails (i.e. is not successfully completed) if the backward message does not identify a media gateway.
   Step (2.3): The BCU-ID of the selected media gateway node is passed in backward direction, as illustrated by the arrow associated with the surrounded reference 9 and the label "APM (BCU-ID_{back-2})".

A call control node that terminates media gateway node negotiation is referred to as terminating call control node CCNₜₑᵣₘ 8 (which corresponds to the second call control node 8, as previously described). It performs the following steps:
Step (1): The terminating call control node CCNₜₑᵣₘ 8 receives a call setup message (e.g. initial addressing message (IAM) message in BICC). This is illustrated by the arrow associated with the surrounded reference 4 and the label "IAM (BCU-ID listₜᵣₐₙ)".
   Step (1.1): If this message includes a list of media gateway node identifiers, the terminating call control node CCNₜₑᵣₘ 8 performs the following steps:
      Step (1.1.1): The terminating call control node CCNₜₑᵣₘ 8 removes any unknown media gateway node identifier BCU-ID from the list. If all media gateway node identifiers BCU-ID are known, no identifier is removed.
      Step (1.1.2): The terminating call control node CCNₜₑᵣₘ 8 removes any media gateway node identifier BCU-ID from the list that is associated to a media gateway node 4 that cannot be used for the call. If all media gateway node identifiers BCU-ID can be used, no identifier is removed.
      Steps (1.1.1) and (1.1.2) are illustrated by the word balloon associated with the surrounded reference 5 and the label "Remove any unknown identifier. Remove any identifier associated to a MG node not applicable for the call".
      Step (1.1.3): The terminating call control node CCNₜₑᵣₘ 8 processes the remaining list BCU-ID listₜᵣₐₙₛ as follows:
         Step (1.1.3.1): If there is at least one element left in the list, the terminating call control node CCNₜₑᵣₘ 8 selects one of them and uses the associated media gateway node 4 to establish the user plane. This is illustrated by the word balloon associated with the surrounded reference 6 and the label "Select any MG from the remaining list (BCU-ID listₜₑᵣₘ)".
         Step (1.1.3.2): If the list is empty, the terminating call control node CCNₜₑᵣₘ 8 selects any media gateway node 4 that is applicable for the call.
      Step (1.1.4): The terminating call control node CCNₜₑᵣₘ 8 sends backwards the BCU-ID of the selected media gateway node (BCU-ID_{back-1}). This is illustrated by the arrow associated with the surrounded reference 7 and the label "APM (BCU-ID_{back-1})"
   Step (1.2): If the received call setup message does not include a list of media gateway node identifiers, the terminating call control node CCNₜₑᵣₘ 8 selects any media gateway node that is applicable for the call.

In one embodiment, instead of sending a list of media gateway identifiers BCU-IDs, an identifier for a set of media gateway nodes BCU-ID_{MGG} is sent. The set or group of media gateways may be defined somewhere else. In other words, in this embodiment, the media gateway group identifier is a placeholder for a list of media gateways defined somewhere else. This may imply that
a) a definition for each media gateway shall be known in the call control node;
b) there are one or more definitions of media gateway groups, while each media gateway in a media gateway group belongs to the set of media gateways known in the call control node (defined in a) ) ; and
c) each media gateway group has an associated group identifier.

This type of media gateway group may be referred to herein as an explicitly defined media gateway group (MGG).

As an example, let us assume that media gateways MGw-1, MGw-2, MGw-3, ... , MGw-7 are defined in a call control node. Then, the following media gateway groups may for instance be explicitly defined:
MGG-1 = {MGw-1, MGw-2, MGw-3};
MGG-2 = {MGw-1, MGw-4, MGw-5}; and
MGG-3 = {MGw-5, MGw-6}.

Such media gateway node negotiation may be introduced in BICC as follows. If BICC is used as call control protocol, an identifier BCU-ID_{MGG} is defined with the same data format as BCU-ID is defined for the BICC protocol (5 octets). This value can be passed over the standard BICC message without any modification. Any node that does not know the value has to ignore this parameter (BICC standard). In nodes that support the usage of BCU-ID_{MGG}, the value is treated as an identifier for a set of media gateway nodes and media gateway node negotiation is performed.

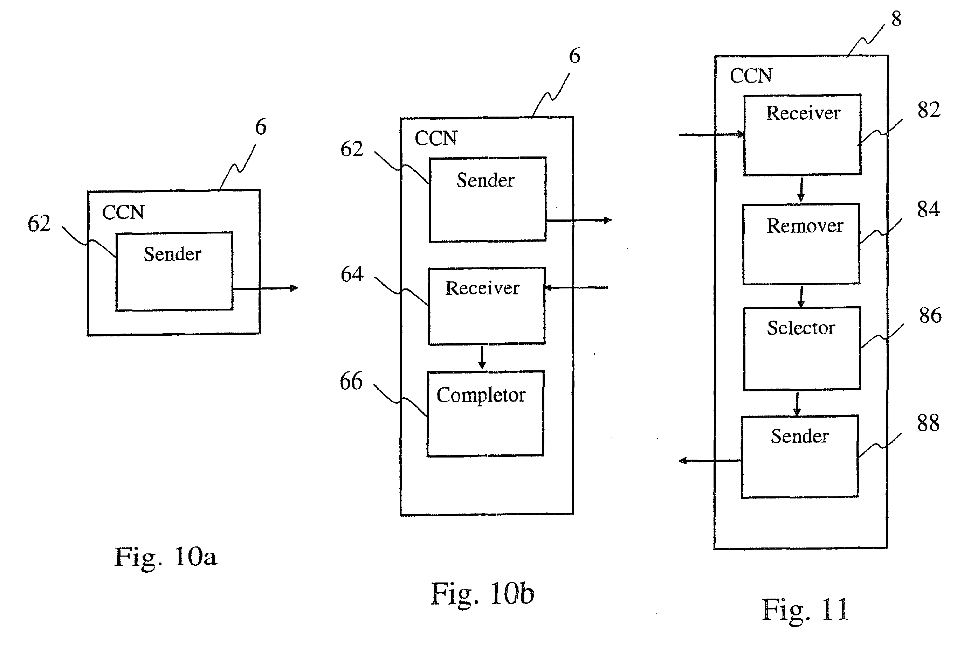

Fig. 10a illustrates a call control node according to an embodiment of the invention. The call control node, herewith referred to as originating or first call control node 6, is configured to participate in establishing a call in a communication network 2 and in negotiating media gateways 4 to be used for the call. The call control node 6 is configured to operate in a control plane and includes a sender 62 configured for sending, towards another call control node 8 (not illustrated in Fig. 10a) in the control plane, a message identifying a list of at least two media gateways 4 considered eligible for the call to be established.

Fig. 10b illustrates a call control node according to an embodiment of the invention. Besides comprising a sender 62 as described with reference to Fig. 10a, the call control node 6 includes a receiver 64 configured for receiving a message identifying a selected media gateway 4, and an completor 66 configured for completing, or attempting to complete, the call to be established using the selected media gateway 4 identified in the received message.

Fig. 11 illustrates a call control node according to an embodiment of the invention. The call control node is herewith referred to as terminating or second call control node 8. It is configured to participate in establishing a call in a communication network 2. The terminating call control node 8 is configured to operate in a control plane and includes a receiver 82, a remover 84, a selector 86 and a sender 88. The receiver 82 is configured for receiving, from another call control node 6 or 7 (not illustrated in Fig. 11) in the control plane, a message identifying a list of at least two media gateways 4. The remover 84 is configured for removing from the list identified by the received message, the media gateways 4 which the call control node 8 cannot select for the call. The selector 86 is configured for selecting, from the list, a media gateway to be used for the call to be established. The sender 88 is configured for sending, towards the other call control node 6 or 7, a message identifying the selected media gateway 4.

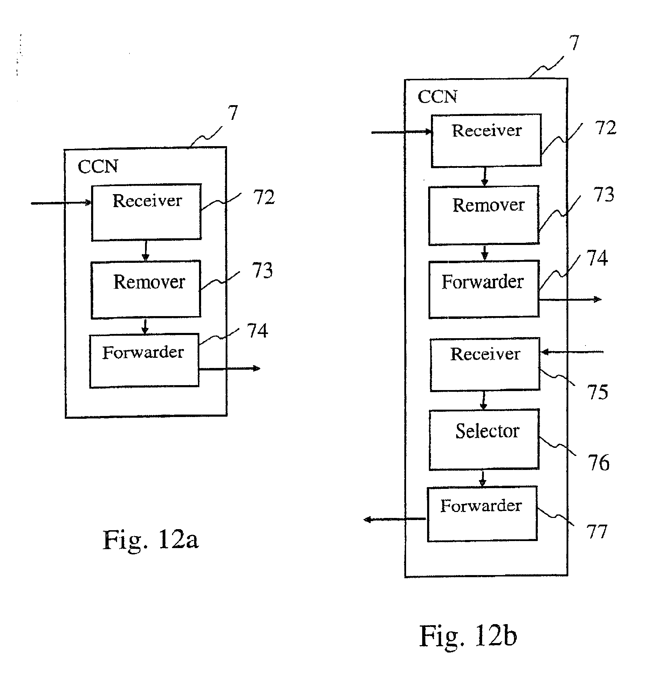

Fig. 12a illustrates a call control node according to an embodiment of the invention. The call control node is herewith referred to as intermediate or third call control node 7. The call control node 7 includes a receiver 72, a remover 73 and a forwarder 74. The receiver 72 is configured for receiving a message sent from a first other call control node 6 (not illustrated in Fig. 12a), or another intermediary call control node 7 (not illustrated in Fig. 12a), in the control plane towards a second other call control node 8 (not illustrated in Fig. 12a), or another intermediary call control node 7 (not illustrated in Fig. 12a), in the control plane, wherein the message identifies a list of at least two media gateways. The remover 73 is configured for removing, from the list identifier by the received message, the media gateways 4 which the call control node 7 cannot select for the call. If all media gateways can be selected, no media gateway identifier is removed from the list. If only one media gateway from the list can be selected, the list is left with one element. If no media gateway from the list can be selected, the list is empty and a new list of media gateways may be created based on the constraints of the call control node 7. Finally, the forwarder 74 is configured for forwarding, towards the second other call control node 8, a message identifying the list.

Fig. 12b illustrates an intermediate call control node 7 including the functionalities of the call control node of Fig. 12a and a receiver 75, a selector 76 and a forwarder 77. The receiver 75 is configured for receiving a message sent towards a first other call control node 6 (not illustrated in Fig. 12b), or towards another intermediary call control node 7 (not illustrated in Fig. 12b), in the control plane by a second other call control node 8 (not illustrated in Fig. 12b), or by another intermediary call control node 7 (not illustrated in Fig. 12a), in the control plane. The message identifies a selected media gateway. The selector 76 is configured for selecting, as a media gateway to be used for the call to be established, the media gateway 4 identified in the received message. Finally, the forwarder 77 is configured for forwarding, towards the first other call control node 6, the message identifying the selected media gateway 4.

The embodiments of the invention as illustrated in Figs. 3a to 12b may be modified by replacing the message identifying a list of at least two media gateways by a message including a group identifier identifying a group of at least two media gateways considered eligible for the call to be established. When a succeeding call control node receives, from a preceding call control node, a message including such a group identifier or media gateway group identifier, the succeeding call control node processes the group of media gateways identified by the group identifier to determine which media gateways of the group can be selected by the call control node.

If all media gateways of the group can be selected and if the succeeding call control node is a terminating call control node 8, the terminating node 8 selects S108 one particular media gateway for the call to be established. If all media gateways of the group can be selected and if the succeeding call control node is an intermediary call control node 7, the intermediary node 7 forwards S120 the message without changing the group identifier.

If only some of the media gateways of the group can be selected and if the succeeding call control node is a terminating call control node 8, the terminating node 8 selects S108 one particular media gateway for the call to be established amongst the media gateways of the group that can be selected. If only some of the media gateways of the group can be selected and if the succeeding call control node is a intermediary call control node 7, the intermediary node 7 replaces the group by a list and forwards S120 the message.

Further embodiments are herewith described. Those are not mutually exclusive and may be combined, unless explicitly stated.

First, one embodiment is described, which provides for the transfer of priority information associated with media gateways. Such transfer takes place between call control nodes 6, 7, 8, in the manner described for instance above with reference to Fig. 3a to 12b, but additionally includes priority information. That is, some media gateways, or more generally at least one media gateway, are marked in the transferred list as prioritized.

Secondly, one embodiment is described, which provides for the compression of the identification information referring to media gateways. Namely, groups of media gateways are identified by group identifiers.

Thirdly, one embodiment is described, which provides for the transfer, between call control nodes 6, 7, 8, of a regional media gateway group (MGG) identifier. The regional media gateway group identifier may be used by call control nodes, as a first example for pooled call control nodes, where a plurality of call control nodes serve a combined area as one large area, and as a second example for call control node (CCN) blade clusters (BC), where a call control node internal architecture is based on a blade approach. The pool and the blade concepts increase reliability, load distribution and scalability.

Turning now to the embodiment providing for priority information transfer, the priority information may include two priority levels, i.e. the media gateway node is prioritized or not, or more than two priority levels. In addition, by arranging the media gateway identifiers (or, in a particular embodiment, "BCU-IDs") within a list in a specific order, prioritization may be expressed. In other words, in one embodiment, the order of the media gateway identifiers in the list confers priority information. A delimiter may also be used. That is, for instance, a particular media gateway identifier BCU-ID is agreed on as being used as delimiter, and separates different portions within a list, indicating different priority levels, each corresponding to a portion. Such a delimiting media gateway identifier BCU-ID may be a BCU-ID which does not correspond to any controlled media gateways of the originating and terminating call control nodes 6, 8.

The transfer of priority information during media gateway selection assists in selecting an optimal media gateway for efficient resources utilization.

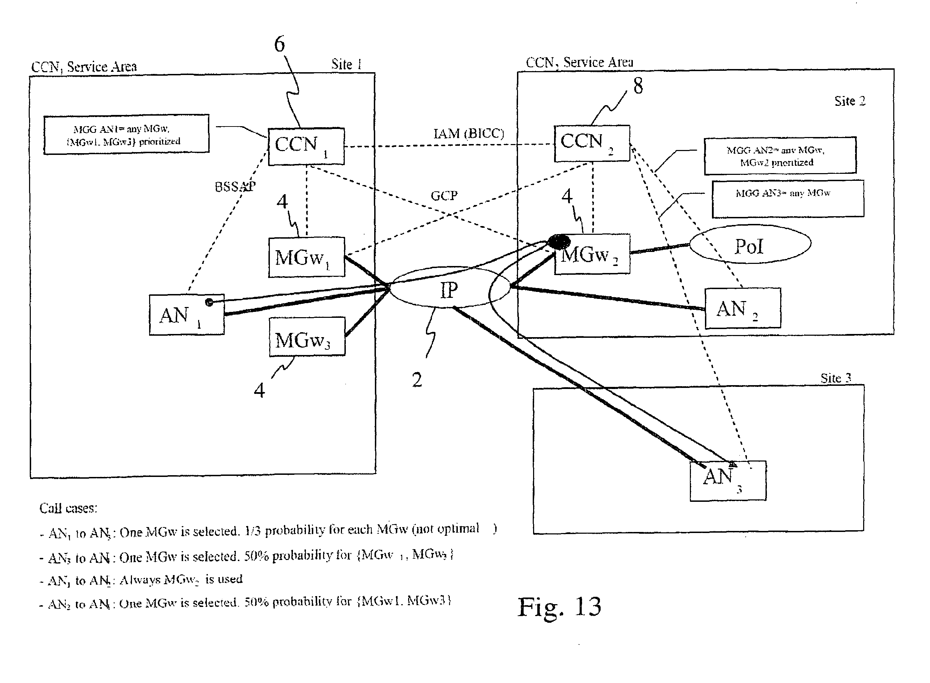

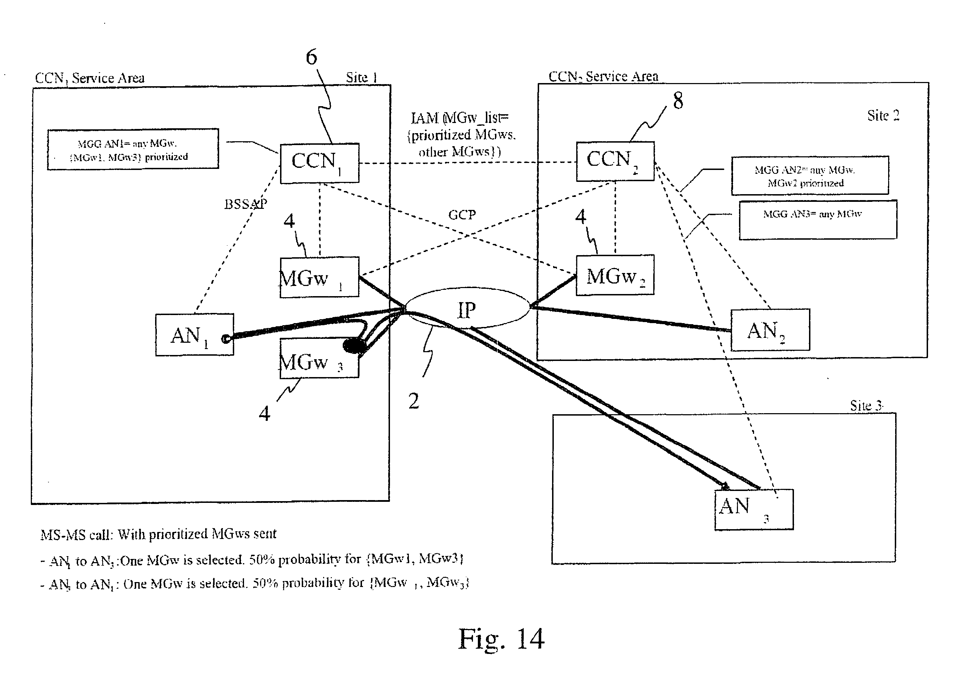

The effects of media gateway prioritization will be better understood with reference to Figs. 13 and 14, wherein dashed lines indicate logical connections within the signalling or control plane, whereas thick solid linear lines indicate user plane connections. Thin curved lines indicate a possible call originating from an access node AN₁ and terminating at an access node AN₃ via a media gateway MGw₂, i.e. a user plane connection.

The protocols indicated, such as BSSAP (Base Station System Application Part), BICC (Bearer Independent Call Control), GCP (Gateway Control Protocol), also referred to as Megaco or MGCP or H.248, are non-limitative.

The interconnection of media gateways MGw₁, MGw₂, MGw₃ is achieved through an internet network (reference "IP"). The abbreviation PoI stands for point of interconnect. The PoI interconnects other fixed networks public switched telephone network (PSTN) or plain old telephone service (POTS) or other mobile networks, such as public land mobile networks (PLMN).

Fig. 13 illustrates an embodiment of the invention when the terminating call control node CCN₂ does not receive any priority indication. Fig. 13 will assist later in understanding the role of priority information. The terminating call control node CCN₂ receives a group identifier from the originating call control node CCN₁ indicating that any media gateway can be used for the call. That is, the access node AN₁ is capable of contacting all media gateways on the illustrated IP interface. The effect is as follows. A call from site 1 to site 3 may be handled with the same probability in any of the three media gateways MGw₁, MGw₂, MGw₃ of the network 2, because the terminating call control node CCN₂ receives no media gateway priority information for the destination access node AN₂. As a result, the user plane traffic may trombone three sites, sites 1, 2 and 3, as shown by the thin thick line starting from access node AN₁ (in site 1), transiting by media gateway MGw₂ (in site 2) and arriving at access node AN₃ (in site 3). This problem can become even worse in large networks wherein many media gateways are deployed and wherein no media gateway is located close to the destination access node AN₃.

Furthermore, a list referring to all media gateways may become long. Especially, with pooled call control node or call control node blade cluster (BC), the served radio access areas and the number of controlled media gateways may be numerous. When a call control node sends a large list or even a complete list of known media gateways, the media gateway selection mechanism generates long messages. Compressing this list is useful, by using of a regional identifier, such as "any MGG" or "AnyMGW-region".

A call control node 6 that starts media gateway selection may mark a number of media gateways within the list as prioritized. The terminating call control node 8, i.e. the call control node that terminates media gateway selection or negotiation, takes this priority indication into account. It preferably selects a prioritized media gateway, if the terminating call control node 8 decides that such a media gateway can be used for the call. In addition, it is possible to send a media gateway identifier BCU-ID to a succeeding node to indicate a preference of the first call control node 6 without selecting the media gateway. This is in particular beneficial for multivendor networks which do not supporting media gateway negotiation. In such a multivendor network scenario, even call control nodes such as media switching center servers MSC-S of different vendors may reuse a preferred media gateway of the preceding call control node, without impacting the BICC standard compliant operations.

In one embodiment, an identifier (which is a type of group identifier) or token, referred to for instance as "ANYMGW" (standing for "any media gateway"), is used. This group identifier indicates that a certain subset of media gateways in a network 2 are eligible. This significantly reduces the size of signalling messages. In many cases, the call control node 6 starting media gateway selection is capable of accessing a big subset or even any media gateway within the network 2. In these cases, without a group identifier, the call control node 6 would have to send a list comprising all media gateway nodes within the network 2. To shorten the list, the special identifier or token, such as the "ANYMGW" identifier, indicating that any defined media gateway can be used. The "ANYMGW" identifier is a type of media gateway group identifier, as referred in the [Summary] section above.

In contrast to the type of media gateway group referred to above as the "explicitly defined media gateway group (MGG)", the "ANYMGW" identifier (which is a type of group identifier) is a placeholder referring to a certain subset of media gateway group nodes defined in a call control node. In case that there is no definition of the subset, this implies that there is no need to have any further definition of a media gateway group.

Automatically, each media gateway defined in the call control node belongs to the "ANYMGW" group. This type of media gateway group may be referred to herein as an implicitly defined media gateway group ("ANYMGW"). In this embodiment, all media gateway groups are implicitly defined by the way the media gateway group itself is defined. There is no explicit listing of the constituents of the media gateway group.

In one embodiment, an identifier (which is a type of group identifier) or token referring to a media gateway region is used. In large networks, it is unlikely that a call control node is capable of controlling all media gateway nodes in the network 2. Grouping media gateways into regions, for example geographical regions, is useful. An indication such as "ANYMGW-region" may be connected to a region identifier (which is a type of group identifier) and means that any media gateway within the region defined by the region identifier can be selected. In one embodiment, a region identifier alone is sent, without adding further information. The call control node can be configured to control media gateways in different regions. The "ANYMGW-region" identifier is a type of media gateway group identifier, as referred in the [Summary] section above.

The use of an "ANYMGW-region" identifier, i.e. an identifier referring to a media gateway region, is an enhancement to the use of the above-referred "implicitly defined media gateway group ("ANYMGW. The use of the "ANYMGW-region" identifier (which is also a type of group identifier), i.e. the use of an implicitly defined media gateway group which is specific to a region, preferably requires that each media gateway is associated to a specific geographical region. A region identifier may be associated with each media gateway. This type of enhanced media gateway group may be referred to herein as an implicitly defined media gateway group which is specific to a region ("ANYMGW-region"). In this embodiment also, all media gateway groups are implicitly defined by the way the media gateway group itself is defined. There is no explicit listing of the constituents of the media gateway group.

As an example, let us assume that R1, R2 and R3 define specific geographical areas. By further assuming that the following media gateway definitions are provided in a call control node:
MGw-1 belongs to R1, R2
MGw-2 belongs to R1, R2
MGw-3 belongs to R1, R3
MGw-4 belongs to R1, R3
MGw-5 belongs to R1
MGw-6 belongs to R1
MGw-7 belongs to R1
then
(AnyMGw,R1) refers to all media gateways (MGw) defined above;
(AnyMGw,R2) refers to MGw-1 and MGw-2; and
(AnyMGw,R3) refers to MGw-3 and MGw-4.

The prioritization of media gateways is herewith further detailed. In one embodiment, it implies introducing a priority indication in the media gateway group, in the media gateway list or associated with the media gateway group, sent from a first call control node 6 to a second, succeeding call control node during media gateway selection. The priority indication can be associated to none, one or more media gateway nodes associated with the exchanged group or list.

In one embodiment, several possibilities exist regarding priority information assignment:
- the media gateway list contains only prioritized media gateways;
- the media gateway list contains prioritized and non-prioritized media gateways;
- the media gateway list contains prioritized media gateways and any other media gateways defined in the network 2 (e.g. using a media gateway group identifier);
- any media gateways defined in the network 2 is marked as prioritized (e.g. using a prioritized media gateway group identifier).

In one embodiment, an existing standardized mechanism is reused, wherein a single media gateway identifier BCU-ID is sent from one node to a succeeding node. This identifier is the media gateway group identifier. The information may be sent in cases where the preceding node has selected a media gateway. This parameter may also be supported in cases where the preceding node has not yet selected a media gateway, but prefers selection of the indicated media gateway. In this embodiment, media gateway selection is improved even if the succeeding node supports the BICC protocol without supporting any of the above-described media gateway selection enhancements.

An example of use of priority information is illustrated in Fig. 14 (in contrast to Fig. 13). The terminating call control node CCN₂ 8 can select a media gateway next to the access node AN1 because it receives media gateway priority information from call control node CCN₁ 6. The thin curved line indicates a possible call originating from access node AN₁ and terminating at access node AN₃ via media gateway MGW₃, i.e. a user plane connection.

In one embodiment, the following is taken into account during media selection:
- Is a media gateway selected on incoming side? yes or no.
   The call control node CCN₁ has selected a media gateway at the time the IAM is sent or it has not selected a media gateway. A media gateway can be selected for example if a TDM connection is used on the call incoming (originating) side.
- Is the common media gateway on incoming and outgoing side? yes or no.
   In some call cases, call control node CCN₁ has selected a media gateway for resources used on the incoming (originating) side, e.g. connected to a TDM link. In a sub-set of these call cases this media gateway can be reused to seize resources for the outgoing trunk. In the remaining number of call cases the media gateway cannot be reused to seize resources for the outgoing trunk, i.e. on incoming and outgoing side different media gateway nodes have to be selected.
- Is a media gateway identifier BCU-ID received? yes or no.
   A call control node CCN₁ does not receive any media gateway information from a previous CCN or it receives media gateway identifier (BCU-ID) from a previous call control node CCN.

The following table describes when media gateway selection is started and when media gateway identifier BCU-ID is sent in the forward direction. ECU-ID is defined in existing BICC standard and identifies a media gateway.

Media gateway selection is started when IAM is sent. The table below may be used for designing and implementing a corresponding decision logic.

**Table 1 Exemplary rules to control start of media gateway selection**

| **Media gateway selected on the incoming side?** | **common media gateway on incoming and outgoing side?** | **BCU-ID received** | **Action** |
|---|---|---|---|
| Yes | Yes | Don't care | Send media gateway selected on incoming side in BCU-ID to next node. Don't start media gateway negotiation. |
| Yes | No | Don't care | Start media gateway negotiation, i.e. send list of media gateway including priority information |
| No | Not known when IAM is sent. Don't care | No | Start media gateway negotiation, i.e. send list of media gateways including priority information. |
| No | Not known when IAM is sent, Don't care | Yes | Case 1: Received BCU-ID is included in the media gateway list, which can be used in media gateway negotiation Forward the received BCU-ID. Start media gateway negotiation, i.e. send list of media gateways including priority information Case 2: Received BCU-ID is not included in the media gateway list, which can be used in media gateway negotiation. Start media gateway negotiation, i.e. send list of media gateway including priority information. Don't send BCU-ID. |

Some of the call cases listed in the table above are described below.

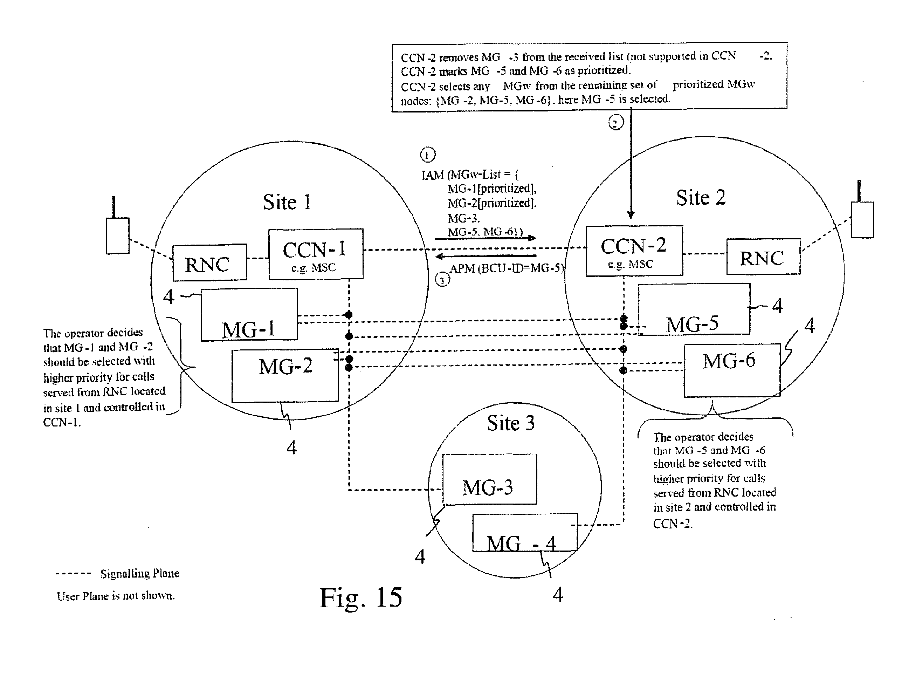

Fig. 15 illustrates a call wherein no media gateway is selected in call control node CCN-1 and no media gateway identifier BCU-ID is received. Call control node CCN-1 starts media gateway negotiation and inserts priority information in the media gateway list. There, call control node CCN-2, which terminates media gateway negotiation, removes unsupported media gateways from the received media gateway list. Media gateways in call control node CCN-2 may be configured as prioritized as well. Call control node CCN-2 adds such a marking to media gateways specified in the received media gateway list. Then call control node CCN-2 attempts to select any one of the media gateways marked as prioritized. If there is no prioritized media gateway, the media gateway selection is applied without taking into account the priority information. Call control node CCN-2 sends information about the selected media gateway back to call control node CCN-1. If this media gateway is specified in the media gateway list generated originally in call control node CCN-1, call control node CCN-1 reuses this media gateway. If the received media gate information is not in the media gateway list, the call control node CCN-1 selects a media gateway marked as prioritized in the original media gateway list. If no media gateway is marked as prioritized call control node CCN-1 selects any of the media gateways specified in the media gateway list. The prioritization marking in the media gateway list can be a simple indication, e.g. 'prioritized' or the priority level.

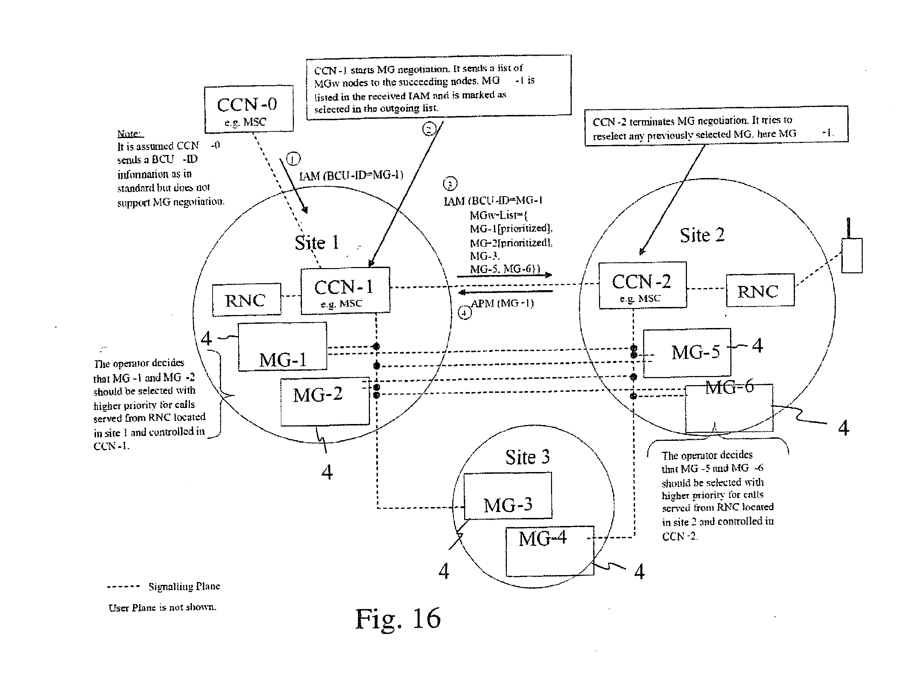

In Fig. 16, another call is illustrated where call control node CCN-1 receives a BCU-ID of the preceding node CCN-0. In this case, the BCU-ID is included in the list of media gateways generated for media gateway selection. A media gateway is not selected in call control node CCN-1. Call control node CCN-1 starts media gateway selection and indicates prioritization in the specified media gateway list. In addition the received BCU-ID information is sent to the succeeding node. Call control node CCN-2, which terminates media gateway selection, processes the received media gateway list as described in the last example. If possible, it tries to select the media gateway specified through the received BCU-ID.

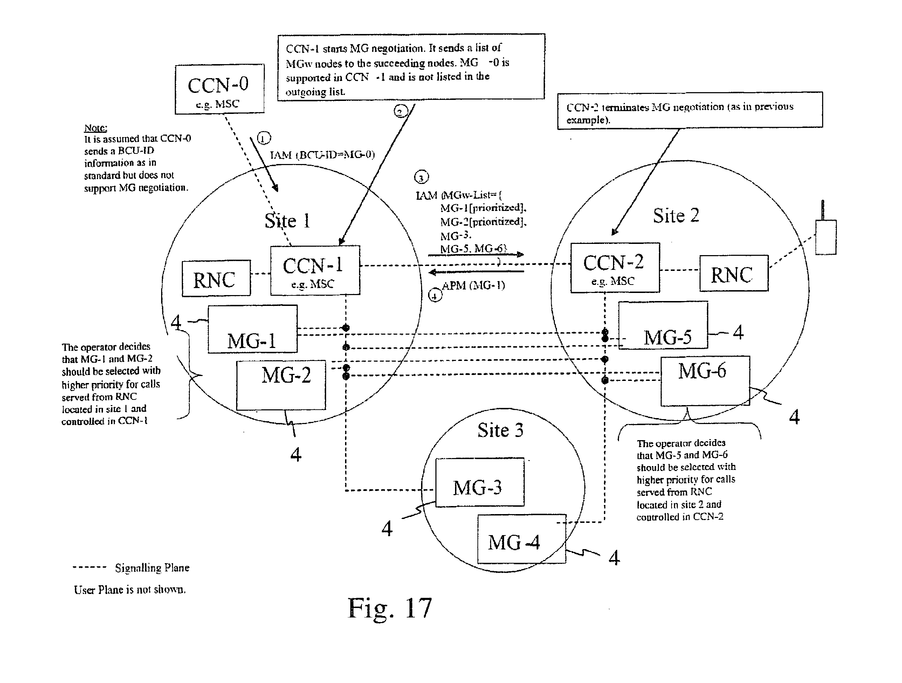

In the call illustrated in Fig. 17, call control node CCN-1 receives a media gateway identifier BCU-ID from the preceding node CCN-O identifying a media gateway that is not included in the list of media gateways generated for media gateway selection. A media gateway is not selected in call control node CCN-1. Call control node CCN-1 starts media gateway selection and indicates prioritization in the media gateway list. In this case, BCU-ID information is not sent to the succeeding node. Any transfer node between call control nodes CCN-1 and CCN-2, should remove unknown media gateways from the media gateway list as described above. Priority indication is not taken into account and may not be added to any element in the list.

The termination of media gateway selection is already described above in the description also with reference to Figs. 15 and 16.

As already indicated, one embodiment relates to the "Any MGw" concept.

For instance, in case of large networks, a list of media gateways within a media gateway group (MGG) may become very long. If for example the access node can connect to all media gateways in the network 2, e.g. using IP connectivity, the list would include all media gateways the call control node CCN can control via GCP.

Therefore, a parameter "any MGw" as media gateway group identifier is used. All specific BCU-IDs need not be sent, but a place holder for a group of media gateways is sent instead. The group of media gateways may notably refer to all media gateway nodes defined in a call control node or to all media gateways having a common attribute, such as a region identifier. This place holder indicates which group of media gateways can be used by the succeeding call control node. Normally every call control node can only control a subset of all media gateways in the network 2 and the meaning of "any MGw" is call control node specific. Therefore, the goal is to select a common media gateway and therefore the succeeding call control node should pick a media gateway knowing which media gateway can be used by the preceding call control node. Therefore, a parameter indicating to the succeeding call control node, which group of media gateways is meant by the "any MGw" indicator is introduced.

Another embodiment derived from the above concept is a regional concept similar to region code in telephony numbers. It allows for defining so-called border media gateways which should be used for calls between regions, i.e. inter-region calls.

In the following, the so-called "regional concept" is further detailed as one embodiment of the invention.

Assuming large networks, a certain number of call control nodes will have exactly the same group of media gateways, which they can control. Especially, for pooled call control nodes this is valid. Additionally, a Blade Cluster call control node can be seen as a region.

This group of media gateways forms a region associated with a media gateway (MGw) region identifier (MRI).

Although in the following a special identifier is introduced any other identifier allowing for uniquely identifying a group of media gateways is equally applicable. Assigning to these call control nodes an MRI parameter allows for sending the "any MGw" indication with prioritized media gateways via BICC to the succeeding call control node adding an MRI.

The succeeding call control node now checks whether it can reuse a prioritized media gateway of the "any MGG" by means of the MRI specified "MGw region". This concept affords that a call control node within another region, e.g. region "2", needs to know when it receives an "any MGw" indication and an "MGG region" indication (MRI), which media gateway of the other region it can control.

This requires with the administration of media gateways in a call control node also a connection to one or more "MGw Regions". A call control node of one region should know which media gateways can be reused for call coming from another region.

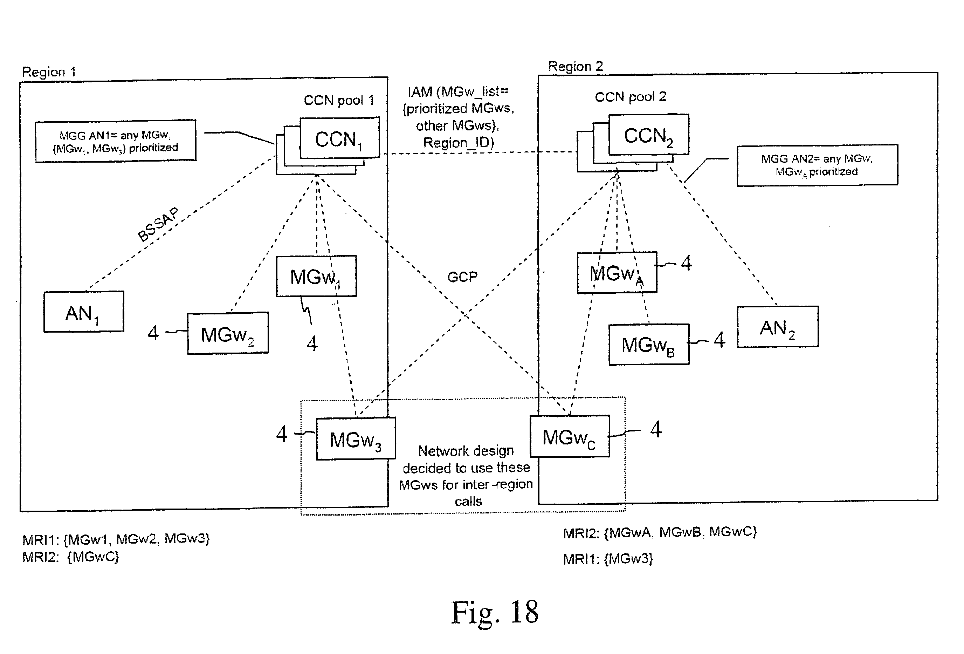

An example thereof is illustrated in Fig. 18. Each region, which could be a call control node pool area, consists of a number of call control nodes that control all media gateways in the region and probably media gateways of another region. If decided at network design, one or more media gateways of other regions can be controlled, e.g. MGw₃ and MGw_{c}. There, "border MGws" would be preferably used for inter region calls.

All calls within a region may be further optimized for using a single media gateway, see above. If a call has to be established between regions, and the call control node CCN₁ from the originating region "1" allows any media gateway for the call with MGw₂ as prioritized, then BICC transports in a container element {"any MGw", MRI1, prioritized MGws=MGw2}. The receiving call control node CCN₂ in region "2" analyzes the received MGG, MRI and preference and checks it against the information for the destination access node AN2. Here, media gateway MGw₂ is not known and therefore skipped, whereas media gateways MGw₃ and MGw_{c} are common media gateways for call control node CCN₂ in the media gateway lists for MRI1 and MRI2.

Therefore, one of those will be selected. MGw₃ and MGw_{c} behave in a sense as "border MGws". In other words, two tokens or identifiers may be used here, i.e. a ANYMGW token and a token representing the region (MRI, REGION-TOK). This region token (MRI) may be provided together with the media gateway list or the media gateway list token ANYMGW as will be shown by the following two examples:
Example 1: Parameter ((MGW-List (BCU-ID1, BCU-ID2, BCU-ID3), REGION-TOK-1), MGW-List (BCU-ID11), REGION-TOK-2))
Example 2: Parameter ((ANYMGW, REGION-TOK-1), (MGw-List (BCU-ID10, BCU-ID11), REGION-TOK-2))

The introduction of prioritized media gateways improves media gateway selection and allows selection of a common media gateway located close to an access node in call cases where any media gateway in the network 2 could be selected as well.

Furthermore, sending a BCU-ID to indicate preference is an improvement in call cases where the succeeding node supports the BICC protocol without any proposed enhancement of media gateway selection.

The introduction of a group identifier token ANYMGW reduces the data volume to be transferred in media gateway selection in call cases where the call control node can select any defined media gateway.

Still further, the introduction of regional concept improves handling of ANYMGW in large networks or in networks with implicit network structures. For example media gateways controlled by a call control node pool can be configured as a media gateway region or media gateways controlled from a call control node Blade Cluster can be configured as a media gateway region.

Furthermore, it could be foreseen to send a region identifier alone, if an implementation thereof postulates its use in connection with an ANYMGW indication, which then would add no further information. However, such an indication of ANYMGW could still be used in case some call control node is able to handle ANYMGW but not able to handle a MRI.

Further embodiments of the invention include:

According to an embodiment (I), it is provided a method for establishing a call in a communication network 2 by selecting media gateways 4 to be used for the call, the media gateways 4 being in a user plane, the method including a negotiating procedure S100 provided at least with steps wherein
a first call control node 6 in a control plane sends S102, towards a second call control node 8 in the control plane, a message identifying a list of at least two media gateways 4 considered eligible for the call to be established.

According to an embodiment (II), it is provided a method of embodiment (I), wherein sending S102 the message by the first call control node 6 towards the second call control node 8 is in the forward direction, which is the direction of establishment of the call connection.

According to an embodiment (III), it is provided a method of embodiment (I) or (II), wherein the negotiating procedure S100 is further provided with steps wherein the second call control node 8
receives S104 the message from the first call control node 6;
removes S106, from the list identified by the received message, the media gateways 4 which the second call control node 8 cannot select for the call;
selects S108, from the list, a media gateway 4 to be used for the call to be established; and
sends S110, towards the first call control node 6, a message identifying the selected media gateway 4.

According to an embodiment (IV), it is provided a method of embodiment (III), wherein the negotiating procedure S100 is further provided with steps wherein the first call control node 6
receives S112 the message identifying the selected media gateway 4; and
completes S114, or attempts to complete, the call to be established using the selected media gateway 4 identified in the received message.

According to an embodiment (V), it is provided a method of any one of embodiments (I) to (IV), wherein the negotiating procedure S100 is further provided with steps wherein a third call control node 7
receives S116 the message sent by the first call control node 6 sent towards the second call control node 8;
removes S118, from the list identified by the received message, the media gateways 4 which the third call control node 7 cannot select for the call; and
forwards S120, towards the second call control node 8, a message identifying the list.

According to an embodiment (VI), it is provided a method, performed by a call control node 6 in a control plane, for participating in establishing a call in a communication network 2 by selecting media gateways 4 to be used for the call, the media gateways 4 being in a user plane, the method including a negotiating procedure S600 provided at least with steps wherein
the call control node 6 sends S102, towards another call control node 8 in the control plane, a message identifying a list of at least two media gateways 4 considered eligible for the call to be established.

According to an embodiment (VII), it is provided a method of embodiment (VI), wherein sending S102 the message by the call control node 6 towards the other call control node 8 is in the forward direction, which is the direction of establishment of the call connection.

According to an embodiment (VIII), it is provided a method of embodiment (VI) or (VII), wherein the negotiating procedure S600 is further provided with steps wherein the call control node 6
receives S112 a message identifying a selected media gateway; and
completes S114, or attempts to complete, the call to be established using the selected media gateway 4 identified in the received message.

According to an embodiment (IX), it is provided a method, performed by a call control node 8 in a control plane, for participating in establishing a call in a communication network 2 by selecting media gateways 4 to be used for the call, the media gateways 4 being in a user plane, the method including a negotiating procedure S800 provided at least with steps wherein the call control node 8
receives S104, from another call control node 6 in the control plane, a message identifying a list of at least two media gateways 4;
removes S106, from the list identified by the received message, the media gateways 4 which the call control node 8 cannot select for the call;
selects S108, from the list, a media gateway 4 to be used for the call to be established; and
sends S110, towards the other call control node 6, a message identifying the selected media gateway 4.

According to an embodiment (X), it is provided a method, performed by a call control node 7 in a control plane, for participating in establishing a call in a communication network 2 by selecting media gateways 4 to be used for the call, the media gateways 4 being in a user plane, the method including a negotiating procedure S710 provided at least with steps wherein the call control node 7
receives S116 a message sent from a first other call control node 6 in the control plane towards a second other call control node 8 in the control plane, the message identifying a list of at least two media gateways 4;
removes S118, from the list identified by the received message, the media gateways 4 which the call control node 7 cannot select for the call; and
forward S120, towards the second other call control node 8, a message identifying the list.

According to an embodiment (XI), it is provided a call control node 6 configured to participate in establishing a call in a communication network 2 and in negotiating media gateways 4 to be used for the call, the media gateways 4 being in a user plane, the call control node 6 being configured to operate in a control plane and including
a sender 62 configured for sending, towards another call control node 8 in the control plane, a message identifying a list of at least two media gateways 4 considered eligible for the call to be established.

According to an embodiment (XII), it is provided a node 6 of embodiment (XI), further including
a receiver 64 configured for receiving a message identifying a selected media gateway 4; and
a completor 66 configured for completing, or attempting to complete, the call to be established using the selected media gateway 4 identified in the received message.

According to an embodiment (XIII), it is provided a call control node 8 configured to participate in establishing a call in a communication network 2 and in negotiating media gateways 4 to be used for the call, the media gateways 4 being in a user plane, the call control node 8 being configured to operate in a control plane and including
a receiver 82 configured for receiving, from another call control node 6 in the control plane, a message identifying a list of at least two media gateways 4;
a remover 84 configured for removing, from the list identified by the received message, the media gateways 4 which the call control node 8 cannot select for the call;
a selector 86 configured for selecting, from the list, a media gateway to be used for the call to be established; and
a sender 88 configured for sending, towards the other call control node 6, a message identifying the selected media gateway 4.

According to an embodiment (XIV), it is provided a call control node 7 configured to participate in establishing a call in a communication network 2 and in negotiating media gateways 4 to be used for the call, the media gateways 4 being in a user plane, the call control node 7 being configured to operate in a control plane and including
a receiver 72 configured for receive receiving a message sent from a first other call control node 6 in the control plane towards a second other call control node 8 in the control plane, the message identifying a list of at least two media gateways 4;
a remover 73 configured for removing, from the list identified by the received message, the media gateways 4 which the call control node 7 cannot select for the call; and
a forwarder 74 configured for forwarding, towards the second other call control node 8, a message identifying the list.

According to an embodiment (XV), it is provided a computer program comprising instructions configured, when executed on a call control node 6, 7, 8, to cause the call control node 6, 7, 8 to carry out the method according to any one of embodiments (VI) to (X), (XVIII) and (XIX).

According to an embodiment (XVI), it is provided a method of any one of the embodiments (I) to (V), wherein the message sent by the first call control node 6 towards the second call control node 8 includes information, herein referred to as priority information, indicating that at least one media gateway 4 of the list of at least two media gateways 4 should be preferably selected for the call to be established. Of course, either one of the at least two media gateways 4 could also be replaced by an "anyMGW" identifier (e.g. *"MGw-list* = *(MGw1:prioritized, AnyMGw)*").

According to an embodiment (XVII), it is provided a method of embodiments (III) or (IV), wherein
the message sent by the first call control node 6 towards the second call control node 8 includes information, herein referred to as priority information, indicating that at least one media gateway 4 of the list of at least two media gateways 4 should be preferably selected for the call to be established; and
the second call control node 8 preferably selects 5108, from the list, a media gateway 4 that should be preferably selected for the call to be established.

According to an embodiment (XVIII), it is provided a method of embodiment (VI), wherein the message sent by the call control node 6 towards the another call control node 8 includes information, herein referred to as priority information, indicating that at least one media gateway 4 of the list of at least two media gateways 4 should be preferably selected for the call to be established.

According to an embodiment (XIX), it is provided a method of embodiment (IX), wherein
the received message includes information, herein referred to as priority information, indicating that at least one media gateway 4 of the list of at least two media gateways 4 should be preferably selected for the call to be established; and
the call control node 8 preferably selects S108, from the list, a media gateway 4 that should be preferably selected for the call to be established.

According to an embodiment (XX), it is provided a node 6 of embodiment (XI), wherein the message which the sender 62 is configured to send includes information, herein referred to as priority information, indicating that at least one media gateway 4 of the list of at least two media gateways 4 should be preferably selected for the call to be established.

According to an embodiment (XXI), it is provided a node 8 of embodiment (XIII), wherein
the message which the receiver 82 is configure to receive includes information, herein referred to as priority information, indicating that at least one media gateway 4 of the list of at least two media gateways 4 should be preferably selected for the call to be established, and
the selector 86 is configured to preferably select, from the list, a media gateway 4 that should be preferably selected for the call to be established.

The physical entities according to the invention, including the call control nodes and the media gateways may comprise or store computer programs including instructions such that, when the computer programs are executed on the physical entities, steps and procedures according to one embodiment of the invention are carried out. The invention also relates to such computer programs for carrying out methods according to the invention, and to any computer-readable medium storing the computer programs for carrying out methods according to the invention.

Where the terms "sender", "receiver", "completor", "remover", "selector", and "forwarder" are used herewith, no restriction is made regarding how distributed these elements of a call control node may be and regarding how gathered elements may be. That is, the constituent elements of a unit may be distributed in different software or hardware components or devices for bringing about the intended function. A plurality of distinct elements may also be gathered for providing the intended functionalities.

Any one of the above-referred elements of a call control node may be implemented in hardware, software, field-programmable gate array (FPGA), application-specific integrated circuit (ASICs), firmware or the like.

In further embodiments of the invention, any one of the above-mentioned and/or claimed sender, receiver, completor, remover, selector and forwarder is replaced by sending means, receiving means, completing means, removing means, selecting means or forwarding means respectively, or by a sending unit, a receiving unit, a completing unit, a removing unit, a selecting unit or a forwarding unit respectively, for performing the functions of the sender, receiver, completor, remover, selector or forwarder respectively.

In further embodiments of the invention, any one of the above-described procedures, portions of procedure and/or steps may be implemented using computer-readable instructions, for instance in the form of computer-understandable procedures, methods or the like, in any kind of computer languages, and/or in the form of embedded software on firmware, integrated circuits or the like.

Although the present invention has been described on the basis of detailed examples, the detailed examples only serve to provide the skilled person with a better understanding, and are not intended to limit the scope of the invention. The scope of the invention is much rather defined by the appended claims.

## Claims

1. Method for establishing a call in a communication network (2) by selecting media gateways (4) to be used for the call, the media gateways (4) being in a user plane, the method including a negotiating procedure (S100) provided at least with steps wherein
a first call control node (6) sends (S102), towards a second call control node (8), a message identifying media gateways (4) considered eligible for the call to be established, the message including an identifier indicating that any media gateway (4) in a group of at least two media gateways (4) of the communication network (2) is considered eligible.

2. Method of claim 1, wherein the message does not include an identifier of any individual media gateway (4).

3. Method according to any one of the preceding claims, wherein the negotiating procedure (S100) is further provided with steps wherein the second call control node (8)
receives (S104) the message from the first call control node (6);
selects (S108), as media gateway to be used for the call to be established, amongst the group of at least two media gateways (4) identified by the received message, a media gateway (4) which the second call control node (8) can select for the call; and
sends (S110), towards the first call control node (6), a message identifying the selected media gateway.

4. Method according to claim 3, wherein
the message received by the second call control node (8) further includes information, herein referred to as priority information, indicating that at least one media gateway (4) should be preferably selected for the call to be established; and
the second call control node (8) preferably selects (S108) one of the at least one media gateway (4) that should be preferably selected for the call to be established.

5. Method, performed by a call control node (6), for participating in establishing a call in a communication network (2) by selecting media gateways (4) to be used for the call, the media gateways (4) being in a user plane, the method including a negotiating procedure (S100, S600) provided at least with steps wherein
the call control node (6) sends (S102), towards another call control node (8), a message identifying media gateways (4) considered eligible for the call to be established, the message including an identifier indicating that any media gateway (4) in a group of at least two media gateways (4) of the communication network (2) is considered eligible.

6. Method of claim 5, wherein the message does not include an identifier of any individual media gateway (4).

7. Method of claim 5 or 6, wherein the identifier included in the message indicates that any media gateway (4) in the communication network (2) is considered eligible.

8. Method of claim 5 or 6, wherein the identifier included in the message indicates that any media gateway (4) in a region of the communication network (2) is considered eligible.

9. Method according to any one of claims 5 to 8, wherein the message further includes information, herein referred to as priority information, indicating that at least one media gateway (4) should be preferably selected for the call to be established.

10. Method according to any one of claims 5 to 9, wherein the negotiating procedure (S100, S600) is further provided with steps wherein the call control node (6)
receives (S112) a message identifying a selected media gateway; and
initiates (S114) the call to be established using the selected media gateway identified in the received message.

11. Method, performed by a call control node (8), for participating in establishing a call in a communication network (2) by selecting media gateways (4) to be used for the call, the media gateways (4) being in a user plane, the method including a negotiating procedure (S100, S800) provided at least with steps wherein the call control node (8)
receives (S104), from another call control node (6), a message identifying media gateways (4) considered eligible for the call to be established, the message including an identifier indicating that any media gateway (4) in a group of at least two media gateways (4) of the communication network (2) are considered eligible;
selects (S108), as media gateway (4) to be used for the call to be established, amongst the group of at least two media gateways (4) identified by the received message, a media gateway (4) which the call control node can select for the call; and
sends (S110), towards the other call control node (6), a message identifying the selected media gateway.

12. Method of claim 11, wherein
the message received by the call control node (8) further includes information, herein referred to as priority information, indicating that at least one media gateway (4) should be preferably selected for the call to be established; and
the call control node (8) preferably selects (S108) one of the at least one media gateway (4) that should be preferably selected for the call to be established.

13. Call control node (6) configured to participate in establishing a call in a communication network (2) and in negotiating media gateways (4) to be used for the call, the media gateways (4) being in a user plane, the call control node (6) comprising
a sender (62) configured to send, towards another call control node (8), a message identifying media gateways (4) considered eligible for the call to be established, the message including an identifier indicating that any media gateway (4) in a group of at least two media gateways (4) of the communication network (2) are considered eligible.

14. Call control node (8) configured to participate in establishing a call in a communication network (2) and in negotiating media gateways (4) to be used for the call, the media gateways (4) being in a user plane, the call control node (8) including
a receiver (82) configured for receiving, from another call control node (6), a message identifying media gateways (4) considered eligible for the call to be established, the message including an identifier indicating that any media gateway (4) in a group of at least two media gateways (4) of the communication network (2) are considered eligible;
a selector (86) configured for selecting, as media gateway (4) to be used for the call to be established, amongst the group of at least two media gateways (4) identified by the received message, a media gateway (4) which the call control node (8) can select for the call; and
a sender (88) configured for sending, towards the other call control node (8), a message identifying the selected media gateway.

15. Computer program comprising instructions configured, when executed on a call control node, to cause the call control node to carry out the method according to any one of claims 5 to 12.

## Patentansprüche

1. Verfahren zur Herstellung eines Rufes in einem Kommunikationsnetz (2) durch Auswählen von Media-Gateways (4), die für den Ruf verwendet werden sollen, wobei die Media-Gateways (4) in einer Benutzerebene sind, und das Verfahren eine Verhandlungsprozedur (S100) umfasst, die zumindest mit Schritten versehen ist, wobei
ein erster Rufsteuerungsknoten (6) eine Nachricht zu einem zweiten Rufsteuerungsknoten (8) sendet (S102), welche Media-Gateways (4) identifiziert, die als für den herzustellenden Ruf geeignet erachtet werden, wobei die Nachricht eine Kennung enthält, die anzeigt, dass ein beliebiges Media-Gateway (4) in einer Gruppe von mindestens zwei Media-Gateways (4) des Kommunikationsnetzes (2) als geeignet erachtet wird.

2. Verfahren nach Anspruch 1, wobei die Nachricht keine Kennung irgendeines einzelnen Media-Gateways (4) enthält.

3. Verfahren nach einem der vorhergehenden Ansprüche, wobei die Verhandlungsprozedur (S100) ferner mit Schritten versehen ist, wobei der zweite Rufsteuerungsknoten (8)
die Nachricht vom ersten Rufsteuerungsknoten (6) empfängt (S104);
als Media-Gateway, das für den herzustellenden Ruf verwendet werden soll, aus der Gruppe von mindestens zwei Media-Gateways (4), die durch die empfangene Nachricht identifiziert werden, ein Media-Gateway (4) auswählt (S108), welches der zweite Rufsteuerungsknoten (8) für den Ruf auswählen kann; und
eine Nachricht zum ersten Rufsteuerungsknoten (6) sendet (S110), die das ausgewählte Media-Gateway identifiziert.

4. Verfahren nach Anspruch 3, wobei
die Nachricht, die durch den zweiten Rufsteuerungsknoten (8) empfangen wird, ferner Informationen enthält, die hierin als Prioritätsinformationen bezeichnet werden und anzeigen, dass mindestens ein Media-Gateway (4) vorzugsweise für den herzustellenden Ruf ausgewählt werden sollte; und
der zweite Rufsteuerungsknoten (8) vorzugsweise eines des mindestens einen Media-Gateways (4) auswählt (S108), das vorzugsweise für den herzustellenden Ruf ausgewählt werden sollte.

5. Verfahren, durchgeführt durch einen Rufsteuerungsknoten (6), zur Teilnahme an der Herstellung eines Rufes in einem Kommunikationsnetz (2) durch Auswählen von Media-Gateways (4), die für den Ruf verwendet werden sollen, wobei die Media-Gateways (4) in einer Benutzerebene sind, und das Verfahren eine Verhandlungsprozedur (S100, S600)) umfasst, die zumindest mit Schritten versehen ist, wobei
der Rufsteuerungsknoten (6) eine Nachricht zu einem anderen Rufsteuerungsknoten (8) sendet (S102), welche Media-Gateways (4) identifiziert, die als für den herzustellenden Ruf geeignet erachtet werden, wobei die Nachricht eine Kennung enthält, die anzeigt, dass ein beliebiges Media-Gateway (4) in einer Gruppe von mindestens zwei Media-Gateways (4) des Kommunikationsnetzes (2) als geeignet erachtet wird.

6. Verfahren nach Anspruch 5, wobei die Nachricht keine Kennung irgendeines einzelnen Media-Gateways (4) enthält.

7. Verfahren nach Anspruch 5 oder 6, wobei die Kennung, die in der Nachricht enthalten ist, anzeigt, dass ein beliebiges Media-Gateway (4) im Kommunikationsnetz (2) als geeignet erachtet wird.

8. Verfahren nach Anspruch 5 oder 6, wobei die Kennung, die in der Nachricht enthalten ist, anzeigt, dass ein beliebiges Media-Gateway (4) in einer Region des Kommunikationsnetzes (2) als geeignet erachtet wird.

9. Verfahren nach einem der Ansprüche 5 bis 8, wobei die Nachricht ferner Informationen enthält, die hierin als Prioritätsinformationen bezeichnet werden und anzeigen, dass mindestens ein Media-Gateway (4) vorzugsweise für den herzustellenden Ruf ausgewählt werden sollte.

10. Verfahren nach einem der Ansprüche 5 bis 9, wobei die Verhandlungsprozedur (S100, S600) ferner mit Schritten versehen ist, wobei der Rufsteuerungsknoten (6)
eine Nachricht empfängt (S112), die ein ausgewähltes Media-Gateway identifiziert; und
den herzustellenden Ruf unter Verwendung des ausgewählten Media-Gateways einleitet (S114), das in der empfangenen Nachricht identifiziert wird.

11. Verfahren, durchgeführt durch einen Rufsteuerungsknoten (8), zur Teilnahme an der Herstellung eines Rufes in einem Kommunikationsnetz (2) durch Auswählen von Media-Gateways (4), die für den Ruf verwendet werden sollen, wobei die Media-Gateways (4) in einer Benutzerebene sind, und das Verfahren eine Verhandlungsprozedur (S100, S800)) umfasst, die zumindest mit Schritten versehen ist, wobei der Rufsteuerungsknoten (8)
eine Nachricht von einem anderen Rufsteuerungsknoten (6) empfängt (S104), welche Media-Gateways (4) identifiziert, die als für den herzustellenden Ruf geeignet erachtet werden, wobei die Nachricht eine Kennung enthält, die anzeigt, dass ein beliebiges Media-Gateway (4) in einer Gruppe von mindestens zwei Media-Gateways (4) des Kommunikationsnetzes (2) als geeignet erachtet wird;
als Media-Gateway (4), das für den herzustellenden Ruf verwendet werden soll, aus der Gruppe von mindestens zwei Media-Gateways (4), die durch die empfangene Nachricht identifiziert werden, ein Media-Gateway (4) auswählt (S108), welches der Rufsteuerungsknoten für den Ruf auswählen kann; und
eine Nachricht zum anderen Rufsteuerungsknoten (6) sendet (S110), die das ausgewählte Media-Gateway identifiziert.

12. Verfahren nach Anspruch 11, wobei:
die Nachricht, die durch den Rufsteuerungsknoten (8) empfangen wird, ferner Informationen enthält, die hierin als Prioritätsinformationen bezeichnet werden und anzeigen, dass mindestens ein Media-Gateway (4) vorzugsweise für den herzustellenden Ruf ausgewählt werden sollte; und
der Rufsteuerungsknoten (8) vorzugsweise eines des mindestens einen Media-Gateways (4) auswählt (S108), das vorzugsweise für den herzustellenden Ruf ausgewählt werden sollte.

13. Rufsteuerungsknoten (6), der so konfiguriert ist, dass er am Herstellen eines Rufes in einem Kommunikationsnetz (2) und am Aushandeln von Media-Gateways (4) teilnimmt, die für den Ruf ausgewählt werden sollen, wobei die Media-Gateways (4) in einer Benutzerebene sind, und der Rufsteuerungsknoten (6) umfasst:
einen Sender (62), der so konfiguriert ist, dass er eine Nachricht zu einem anderen Rufsteuerungsknoten (8) sendet, welche Media-Gateways (4) identifiziert, die als für den herzustellenden Ruf geeignet erachtet werden, wobei die Nachricht eine Kennung enthält, die anzeigt, dass ein beliebiges Media-Gateway (4) in einer Gruppe von mindestens zwei Media-Gateways (4) des Kommunikationsnetzes (2) als geeignet erachtet wird.

14. Rufsteuerungsknoten (8), der so konfiguriert ist, dass er am Herstellen eines Rufes in einem Kommunikationsnetz (2) und am Aushandeln von Media-Gateways (4) teilnimmt, die für den Ruf ausgewählt werden sollen, wobei die Media-Gateways (4) in einer Benutzerebene sind, und der Rufsteuerungsknoten (8) umfasst:
einen Empfänger (82), der so konfiguriert ist, dass er eine Nachricht von einem anderen Rufsteuerungsknoten (6) empfängt, welche Media-Gateways (4) identifiziert, die als für den herzustellenden Ruf geeignet erachtet werden, wobei die Nachricht eine Kennung enthält, die anzeigt, dass ein beliebiges Media-Gateway (4) in einer Gruppe von mindestens zwei Media-Gateways (4) des Kommunikationsnetzes (2) als geeignet erachtet wird;
einen Wähler (86), der so konfiguriert ist, dass er als Media-Gateway (4), das für den herzustellenden Ruf ausgewählt werden soll, aus der Gruppe von mindestens zwei Media-Gateways (4), die durch die empfangene Nachricht identifiziert werden, ein Media-Gateway (4) auswählt, welches der Rufsteuerungsknoten (8) für den Ruf auswählen kann; und
einen Sender (88), der so konfiguriert ist, dass er eine Nachricht zum anderen Rufsteuerungsknoten (8) sendet, die das ausgewählte Media-Gateway identifiziert.

15. Computerprogrammprodukt, umfassend Anweisungen, die so konfiguriert sind, dass sie, wenn auf einem Rufsteuerungsknoten ausgeführt, den Rufsteuerungsknoten veranlassen, das Verfahren nach einem der Ansprüche 5 bis 12 auszuführen.

## Revendications

1. Procédé d'établissement d'un appel dans un réseau de communication (2) en sélectionnant des passerelles média (4) à utiliser pour l'appel, les passerelles média (4) se trouvant dans un plan d'utilisateur, le procédé incluant une procédure de négociation (S100) comportant au moins les étapes dans lesquelles
un premier noeud de commande d'appel (6) envoie (S102), vers un second noeud de commande d'appel (8), un message identifiant des passerelles média (4) considérées comme admissibles pour l'appel à établir, le message incluant un identifiant indiquant que toute passerelle média (4) dans un groupe d'au moins deux passerelles média (4) du réseau de communication (2) est considérée comme admissible.

2. Procédé selon la revendication 1, dans lequel le message n'inclut pas un identifiant d'une quelconque passerelle média individuelle (4).

3. Procédé selon une quelconque des revendications précédentes, dans lequel la procédure de négociation (S100) comporte en outre des étapes dans lesquelles le second noeud de commande d'appel (8)
reçoit (S104) le message depuis le premier noeud de commande d'appel (6) ;
sélectionne (S108), comme passerelle média à utiliser pour l'appel à établir, parmi le groupe d'au moins deux passerelles média (4) identifiées par le message reçu, une passerelle média (4) que le second noeud de commande d'appel (8) peut sélectionner pour l'appel ; et
envoie (S110), vers le premier noeud de commande d'appel (6), un message identifiant la passerelle média sélectionnée.

4. Procédé selon la revendication 3, dans lequel
le message reçu par le second noeud de commande d'appel (8) inclut en outre une information, désignée ici comme une information de priorité, indiquant que au moins une passerelle média (4) devrait être de préférence sélectionnée pour l'appel à établir ; et
le second noeud de commande d'appel (8) sélectionne de préférence (S108) une d'au moins une passerelle média (4) qui devrait être de préférence sélectionnée pour l'appel à établir.

5. Procédé, effectué par un noeud de commande d'appel (6), de participation à l'établissement d'un appel dans un réseau de communication (2) en sélectionnant des passerelles média (4) à utiliser pour l'appel, les passerelles média (4) se trouvant dans un plan d'utilisateur, le procédé incluant une procédure de négociation (S100, S600) comportant au moins les étapes dans lesquelles
le noeud de commande d'appel (6) envoie (S102), vers un autre noeud de commande d'appel (8), un message identifiant des passerelles média (4) considérées comme admissibles pour l'appel à établir, le message incluant un identifiant indiquant que toute passerelle média (4) dans un groupe d'au moins deux passerelles média (4) du réseau de communication (2) est considérée comme admissible.

6. Procédé selon la revendication 5, dans lequel le message n'inclut pas un identifiant d'une quelconque passerelle média (4) individuelle.

7. Procédé selon la revendication 5 ou 6, dans lequel l'identifiant inclus dans le message indique que n'importe quelle passerelle média (4) dans le réseau de communication (2) est considérée comme admissible.

8. Procédé selon la revendication 5 ou 6, dans lequel l'identifiant inclus dans le message indique que n'importe quelle passerelle média (4) dans une région du réseau de communication (2) est considérée comme admissible.

9. Procédé selon une quelconque des revendications 5 à 8, dans lequel le message inclut en outre une information, désignée ici comme une information de priorité, indiquant que au moins une passerelle média (4) devrait être de préférence sélectionnée pour l'appel à établir.

10. Procédé selon une quelconque des revendications 5 à 9, dans lequel la procédure de négociation (S100, S600) comporte en outre les étapes dans lesquelles le noeud de commande d'appel (6)
reçoit (S112) un message identifiant une passerelle média sélectionnée ; et
amorce (S114) l'appel à établir en utilisant la passerelle média sélectionnée identifiée dans le message reçu.

11. Procédé, effectué par un noeud de commande d'appel (8), de participation à l'établissement d'un appel dans un réseau de communication (2) en sélectionnant des passerelles média (4) à utiliser pour l'appel, les passerelles média (4) se trouvant dans un plan d'utilisateur, le procédé incluant une procédure de négociation (S100, S800) comportant au moins les étapes dans lesquelles le noeud de commande d'appel (8)
reçoit (S104), depuis un autre noeud de commande d'appel (6), un message identifiant des passerelles média (4) considérées comme admissibles pour l'appel à établir, le message incluant un identifiant indiquant que n'importe quelles passerelles média (4) dans un groupe d'au moins deux passerelles média (4) du réseau de communication (2) sont considérées comme admissibles ;
sélectionne (S108), comme passerelles média (4) à utiliser pour l'appel à établir, parmi le groupe d'au moins deux passerelles média (4) identifiées par le message reçu, une passerelle média (4) que le noeud de commande d'appel peut sélectionner pour l'appel ; et envoie (S110), vers l'autre noeud de commande d'appel (6), un message identifiant la passerelle média sélectionnée.

12. Procédé selon la revendication 11, dans lequel
le message reçu par le noeud de commande d'appel (8) inclut en outre une information, désignée ici comme une information de priorité, indiquant que au moins une passerelle média (4) devrait être de préférence sélectionnée pour l'appel à établir ; et
le noeud de commande d'appel (8) sélectionne de préférence (S108) une d'au moins une passerelle média (4) qui devrait être de préférence sélectionnée pour l'appel à établir.

13. Noeud de commande d'appel (6) configuré pour participer à l'établissement d'un appel dans un réseau de communication (2) et à la négociation des passerelles média (4) à utiliser pour l'appel, les passerelles média (4) se trouvant dans un plan d'utilisateur, le noeud de commande d'appel (6) comprenant
un émetteur (62) configuré pour émettre, vers un autre noeud de commande d'appel (8), un message identifiant des passerelles média (4) considérées comme admissibles pour l'appel à établir, le message incluant un identifiant indiquant que n'importe quelles passerelles média (4) dans un groupe d'au moins deux passerelles média (4) du réseau de communication (2) sont considérées comme admissibles.

14. Noeud de commande d'appel (8) configuré pour participer à l'établissement d'un appel dans un réseau de communication (2) et à la négociation des passerelles média (4) à utiliser pour l'appel, les passerelles média (4) se trouvant dans un plan d'utilisateur, le noeud de commande d'appel (8) incluant
un récepteur (82) configuré pour recevoir, depuis un autre noeud de commande d'appel (6), un message identifiant des passerelles média (4) considérées comme admissibles pour l'appel à établir, le message incluant un identifiant indiquant que n'importe quelles passerelles média (4) dans un groupe d'au moins deux passerelles média (4) du réseau de communication (2) sont considérées comme admissibles ;
un sélecteur (86) configuré pour sélectionner, comme passerelle média (4) à utiliser pour l'appel à établir, parmi le groupe d'au moins deux passerelles média (4) identifiées par le message reçu, une passerelle média (4) que le noeud de commande d'appel (8) peut sélectionner pour l'appel ; et
un émetteur (88) configuré pour mettre, vers l'autre noeud de commande d'appel (8), un message identifiant la passerelle média sélectionnée.

15. Programme informatique comprenant des instructions configurées, quand elles sont exécutées sur un noeud de commande d'appel, pour amener le noeud de commande d'appel à mettre en oeuvre le procédé selon une quelconque des revendications 5 à 12.
